# EUROPEAN PATENT APPLICATION

(11) **EP 4 787 825 A1**
(43) Date of publication of application: **05.08.2026**
(21) Application number: 24884134.8
(22) Date of filing: 15.08.2024
(51) Int. Cl.: H04M 1/72427

(54) **WALLPAPER DISPLAY METHOD AND ELECTRONIC DEVICE**

(30) Priority: 02.11.2023 CN 202311458292
(71) Applicant: Honor Device Co., Ltd., Shenzhen, Guangdong 518040 (CN)
(72) Inventor: WANG, Yuanyuan, Shenzhen, Guangdong 518040 (CN); TIAN, Yutong, Shenzhen, Guangdong 518040 (CN); DENG, Zhaoli, Shenzhen, Guangdong 518040 (CN); HUANG, Liwei, Shenzhen, Guangdong 518040 (CN); QIAN, Kai, Shenzhen, Guangdong 518040 (CN)
(74) Representative: Isarpatent
(86) International application number: PCT/CN2024/112315
(87) International publication number: WO 2025/092127

(57) **Abstract**

Embodiments of this application provide a wallpaper display method and an electronic device. In the method, the electronic device may sequentially display an AOD interface, a lock screen interface, an unlock interface, and display a wallpaper at the AOD interface, the lock screen interface, and a home screen/desktop. The wallpaper may be generated based on a video, video frames used for the wallpaper at the AOD interface, the lock screen interface, and the home screen/desktop are arranged in sequence, and a continuous and dynamic wallpaper playback picture is formed as a user switches from the AOD interface to the lock screen interface and then switches to the home screen/desktop. Moreover, the wallpaper is well fused with the AOD, lock screen, and home screen/desktop interfaces, and a subject in the wallpaper may not be obstructed by non-interactive elements such as time in the interfaces. In addition, the electronic device may further update the wallpaper based on a user-defined or editing operation, facilitating users to set personalized wallpapers and making user operations simple.

## Description

This application claims priority to Chinese Patent Application No. 202311458292.9, entitled "WALLPAPER DISPLAY METHOD AND ELECTRONIC DEVICE" filed with the China National Intellectual Property Administration on November 2, 2023, which is incorporated herein by reference in its entirety.

### TECHNICAL FIELD

This application relates to the field of electronic technologies, and in particular, to a wallpaper display method and an electronic device.

### BACKGROUND

When an electronic device such as a mobile phone is used, a wallpaper is an interface most commonly seen by a user and is also an interface that can highlight personality of the user. Currently, the wallpaper is mainly applied to user interfaces such as always on display (always on display, AOD), a lock screen, and a home screen/desktop. Users usually like to set wallpapers at multiple locations such as the AOD, the lock screen, and the home screen/desktop, to pursue beauty and personality.

### SUMMARY

Embodiments of this application provide a wallpaper display method and an electronic device, which may generate a continuous and dynamic wallpaper from AOD to a lock screen and then to a home screen/desktop based on a user-defined operation, to meet a requirement of a user-defined wallpaper and provide a rich and colorful wallpaper creation space for users.

According to a first aspect, an embodiment of this application provides a wallpaper display method, which may include: detecting, by an electronic device in a screen-locked state or an unlocked state, a first operation, and displaying, by the electronic device, a first interface in response to the first operation, the first interface including an AOD wallpaper; displaying, by the electronic device when the electronic device displays the first interface, a second interface in response to a second operation, the second interface including a lock screen wallpaper; and displaying, by the electronic device, a third interface in response to a third operation for unlocking, the third interface including a home screen/desktop wallpaper.

The AOD wallpaper, the lock screen wallpaper, and the home screen/desktop wallpaper may respectively correspond to a first video frame, a second video frame, and a third video frame in a first video, the second video frame follows the first video frame, and the third video frame follows the second video frame.

In the first aspect, the first interface, the second interface, and the third interface may be an AOD interface, a lock screen interface, and a home screen/desktop interface respectively.

In the first aspect, the first operation may be a screen-off operation, for example, an operation of pressing a power button to turn off a screen performed on the electronic device in the screen-locked state or the unlocked state. In both the screen-locked state and the unlocked state, the screen of the electronic device is in a lit-up state. In the screen-locked state, the lock screen interface is displayed on the screen, and in the unlocked state, the home screen/desktop interface or a user interface of an application opened by a user is displayed on the screen. Not limited to being triggered by the screen-off operation, the electronic device may also display the AOD interface if the user does not operate a mobile phone for a long time in the screen-locked state or the unlocked state.

In the first aspect, the second operation may be a user operation of lighting up the screen, for example, an operation of tapping the screen or an operation of pressing the power button, but is not limited thereto. The screen may alternatively be lit up within the AOD interface based on a scheduled time. The user may set a time for lighting up the screen, and the electronic device lights up the screen when the time arrives. The operation of lighting up the screen within the AOD interface is not limited in this embodiment of this application.

By implementing the method provided in the first aspect, from AOD to the lock screen and then to the home screen/desktop, the AOD wallpaper, the lock screen wallpaper, and the home screen/desktop wallpaper are linked and are no longer separated from each other.

With reference to the first aspect, in some embodiments, the first video frame, the second video frame, and the third video frame are all single frames, a frame interval between the first video frame and the second video frame is greater than a first frame interval, and a frame interval between the second video frame and the third video frame is greater than a second frame interval. For example, the first video frame, the second video frame, and the third video frame may be extracted from the first video according to a frame interval (e.g., 1 second or more). In this way, pictures of the plurality of video frames may be different, and a dynamic change effect is presented in the case of continuous playback.

With reference to the first aspect, in some embodiments, the first video frame, the second video frame, and the third video frame are all multi-frames, a start frame in the second video frame is an end frame in the first video frame, and a start frame in the third video frame is an end frame in the second video frame. In other words, video frames used for the AOD wallpaper, the lock screen wallpaper, and the home screen/desktop wallpaper need to be connected end to end according to an interface switching time point, thereby achieving a continuous dynamic effect from the AOD to the lock screen and then to the home screen/desktop on the whole.

With reference to the first aspect, in some embodiments, the wallpaper can be well fused with the AOD, lock screen, and home screen/desktop interfaces, and a subject (e.g., a person) in the wallpaper may not be obstructed by non-interactive elements such as time in the AOD, lock screen, and home screen/desktop interfaces. The interactive elements in the AOD, lock screen, and home screen/desktop interfaces, such as a fingerprint unlock key in the AOD interface, a password keypad in the lock screen interface, and an application icon in the home screen/desktop, may be overlaid on the subject in the wallpaper, facilitating the user to operate the interactive elements, thereby ensuring implementation of an interface interaction function.

With reference to the first aspect, in some embodiments, the AOD wallpaper, the lock screen wallpaper, and the home screen/desktop wallpaper may directly employ an original video frame in the first video, or may employ an image frame obtained after image processing such as cropping or filtering is performed on the original video frame.

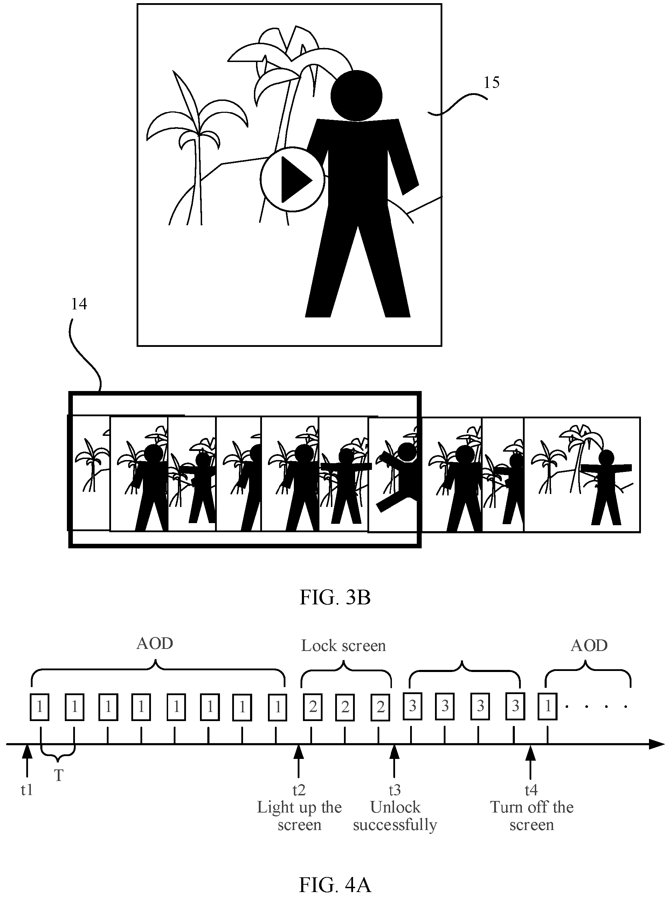

With reference to the first aspect, in some embodiments, the first video may be selected from gallery videos. For example, as shown in FIG. 3B, the user may select a video clip 14 as the first video, to generate a dynamic wallpaper. The first video may be selected from videos in a gallery, or may be selected from a live photo in the gallery. The live photo is also a video. In this way, a requirement of a user-defined wallpaper can be met.

With reference to the first aspect, in some embodiments, the first video may be selected from videos provided by a setting application.

In some embodiments, not limited to jumping from the AOD to the lock screen and then to the home screen/desktop, the method provided in the first aspect is further applied to another adjacent interface jump scenario, for example, jumping from the AOD to the home screen/desktop and then to some application interfaces, which may especially occur when the user has not set the lock screen, for example, jumping from the home screen/desktop to a main application interface and then to a secondary application interface. Certainly, the application interfaces may support wallpaper display, rather than application interfaces not suitable for wallpaper display, such as a game display interface and a video playback interface. For example, a chat wallpaper may be set in a chat interface of "WeChat". That is, the electronic device may sequentially display a plurality of user interfaces at different levels. The electronic device further displays the wallpaper at the plurality of user interfaces. The wallpaper is generated based on the first video, and video frames used for the wallpaper in the plurality of user interfaces at different levels are arranged in sequence. The subject in the wallpaper is displayed above non-interactive elements in the user interfaces and below interactive elements in the user interfaces. In this way, when the user performs multi-level interface jump, a continuous and dynamic wallpaper display effect is achieved on the whole.

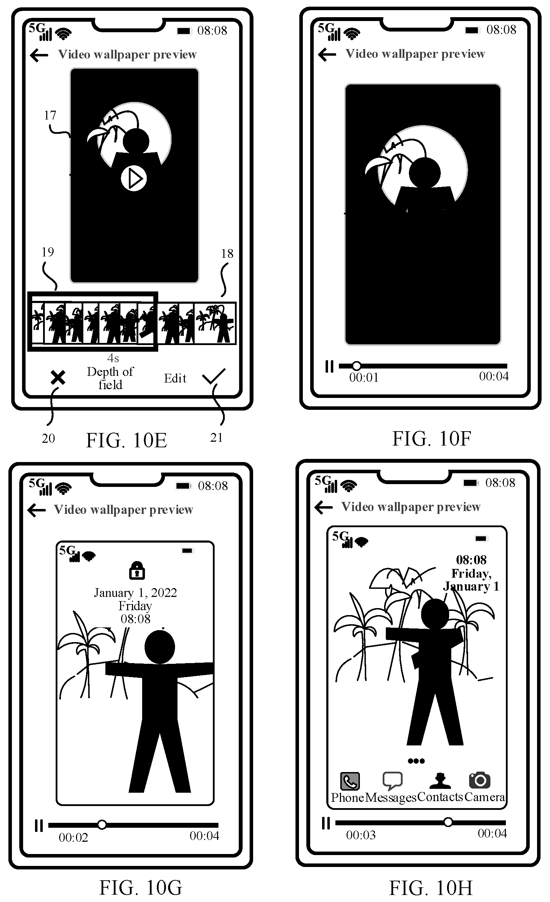

With reference to the first aspect, in some embodiments, the wallpaper display method may further include: displaying, by the electronic device, a fourth interface, the fourth interface including a video frame sequence of a second video; and selecting the first video from the video frame sequence, where the first video is a partial video clip in the second video or an entirety of the second video. The fourth interface may be, for example, a "video wallpaper preview" shown in FIG. 10E, the second video may be a video 16, and the video frame sequence of the second video may be a video frame sequence 18.

In some embodiments, the video frame sequence may include a selection box, for example, a selection box 19 in FIG. 10E. A video in the selection box is the first video. A user operation of selecting the video clip is specifically an operation of sliding the selection box along the video frame sequence.

In some embodiments, the fourth interface further includes a first preview, the first preview being used for displaying display states of the AOD wallpaper, the lock screen wallpaper, and the home screen/desktop wallpaper at the first interface, the second interface, and the third interface, respectively. The first preview may be a preview 17 in FIG. 10E. The first preview may be a video. The first preview presents, during playback, a dynamic display process of switching from the AOD wallpaper to the lock screen wallpaper and then to the home screen/desktop wallpaper.

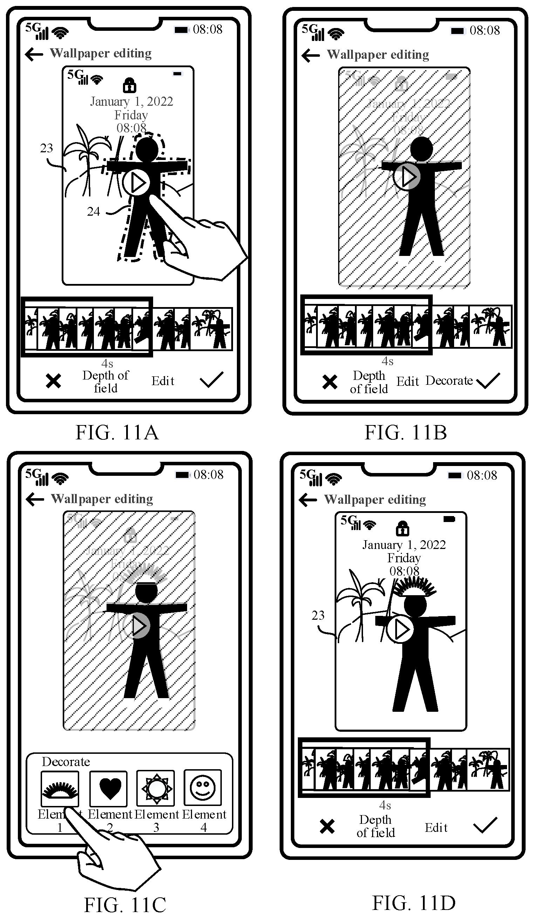

With reference to the first aspect, in some embodiments, the wallpaper display method may further include: displaying, by the electronic device, a fifth interface, a subject and a background of a wallpaper in the fifth interface allowing being selected by a user separately. The fifth interface may be, for example, a "wallpaper editing" interface shown in FIG. 11A. In some embodiments, the wallpaper display method may further include: updating, by the electronic device, an image of the subject in response to a user operation of selecting the subject for subject editing, and refreshing the AOD wallpaper, the lock screen wallpaper, and the home screen/desktop wallpaper based on an updated subject image. In some embodiments, the wallpaper display method may further include: updating, by the electronic device, an image of the background in response to a user operation of selecting the background of the wallpaper for background editing, and refreshing the AOD wallpaper, the lock screen wallpaper, and the home screen/desktop wallpaper based on an updated background image.

In some embodiments, before the displaying, by the electronic device, a fifth interface, the wallpaper display method may further include: performing, by the electronic device, matting for the subject on the first video to separate the subject from the background.

With reference to the first aspect, in some embodiments, the performing, by the electronic device, matting for the subject on the first video specifically includes: performing information compression on a target video frame in a video, to obtain a first image feature; the video being a video clip; segmenting the target video frame based on the first image feature, to obtain a feature of a contour mask image of an object and a first contour mask image of the object in the target video frame that are obtained during segmentation; the object being a subject; performing feature reconstruction based on the first image feature and the obtained feature of the contour mask image, fusing a reconstructed feature with first hidden state information of the video, and updating the first hidden state information, to obtain a fusion result, where the first hidden state information represents a fused feature of transparency mask images of object edges in video frames that undergo matting before the target video frame; obtaining a target transparency mask image of an object edge in the target video frame based on the fusion result; and performing regional matting on the target video frame according to the target transparency mask image and the first contour mask image, to obtain a matting result.

With reference to the first aspect, in some embodiments, the obtaining a target transparency mask image of the object edge in the target video frame based on the fusion result includes: obtaining a second contour mask image of the object in the target video frame based on the fusion result; fusing the second contour mask image with the fusion result to obtain a target fusion feature; and obtaining the target transparency mask image of the object edge in the target video frame based on the target fusion feature.

With reference to the first aspect, in some embodiments, the segmenting the target video frame based on the first image feature, to obtain a feature of a contour mask image of an object and a first contour mask image of the object in the target video frame that are obtained during segmentation includes: performing cascaded feature reconstruction based on the first image feature, to obtain features of contour mask images of the object that are at sequentially increased scales, and obtaining the first contour mask image of the object in the target video frame based on a feature obtained from final processing; and the first hidden state information includes a plurality of pieces of first sub-hidden state information, each piece of first sub-hidden state information representing a fused feature of transparency mask images at one scale; and
the performing feature reconstruction based on the first image feature and the obtained feature of the contour mask image, fusing a reconstructed feature with first hidden state information of the video, and updating the first hidden state information, to obtain a fusion result includes: performing transparency information fusion a preset quantity of times in the following manner, and determining a feature obtained from final processing as the fusion result: performing feature reconstruction based on a first target feature and a second target feature that is in the obtained feature of the contour mask image, to obtain a second image feature at an increased scale, where in a first information fusion operation, the first target feature is the first image feature, and in other information fusion operations, the first target feature is a feature obtained from a previous information fusion operation, and a scale of the first target feature is the same as that of the second target feature; and fusing the second image feature with first sub-state information in the first hidden state information, and updating the first sub-state information, to obtain a third image feature, where the scale of the transparency mask images corresponding to the fused feature represented by the first sub-state information is the same as a scale of the second image feature.

With reference to the first aspect, in some embodiments, the performing feature reconstruction based on a first target feature and a second target feature that is in the obtained feature of the contour mask image, to obtain a second image feature at an increased scale includes: selecting a representative feature of the object edge from the second target feature in the obtained feature of the contour mask image; and performing feature reconstruction based on the first target feature and the representative feature, to obtain the second image feature at the increased scale.

With reference to the first aspect, in some embodiments, the performing cascaded feature reconstruction based on the first image feature, to obtain features of contour mask images of the object that are at sequentially increased scales includes: performing contour information fusion a preset quantity of times in the following manner, to obtain the features of the contour mask images of the object that are at sequentially increased scales: performing feature reconstruction based on a third target feature, to obtain a fourth image feature at an increased scale, where in a first information fusion operation, the third target feature is the first image feature, and in other information fusion operations, the third target feature is a feature obtained from previous feature reconstruction; and fusing the fourth image feature with second sub-state information in second hidden state information, and updating the second sub-state information, to obtain the feature of the contour mask image of the object, the second hidden state information represents a fused feature of contour mask images of the object in video frames segmented before the target video frame, and the second hidden state information includes a plurality of pieces of second sub-hidden state information, each piece of second sub-hidden state information representing a fused feature of contour mask images at one scale, and the scale of the contour mask images corresponding to the fused feature represented by the second sub-state information being the same as a scale of the fourth image feature.

With reference to the first aspect, in some embodiments, the first image feature includes a plurality of first sub-image features. The performing information compression on a target video frame in a video, to obtain a first image feature includes: performing cascaded information compression on the target video frame in the video, to obtain first sub-image features at sequentially decreased scales; and in a first feature reconstruction operation, the third target feature is the first sub-image feature at the smallest scale. The performing feature reconstruction based on a third target feature, to obtain a fourth image feature at an increased scale includes: performing, in other feature reconstruction operations, feature reconstruction based on the third target feature and the first sub-image feature whose scale is the same as that of the third target feature, to obtain the fourth image feature at the increased scale.

With reference to the first aspect, in some embodiments, the fusing the second image feature with first sub-state information in the first hidden state information, and updating the first sub-state information, to obtain a third image feature includes: segmenting the second image feature, to obtain a second sub-image feature and a third sub-image feature; fusing the second sub-image feature with the first sub-state information in the first hidden state information, and updating the first sub-state information, to obtain a fourth sub-image feature; and stitching the fourth sub-image feature and the third sub-image feature, to obtain the third image feature; and
the fusing the fourth image feature with second sub-state information in second hidden state information, and updating the second sub-state information, to obtain the feature of the contour mask image of the object includes: segmenting the fourth image feature, to obtain a fifth sub-image feature and a sixth sub-image feature; and fusing the fifth sub-image feature with the second sub-state information in the second hidden state information, and updating the second sub-state information, to obtain a seventh sub-image feature; and stitching the seventh sub-image feature and the sixth sub-image feature, to obtain the feature of the contour mask image of the object.

With reference to the first aspect, in some embodiments, the performing information compression on a target video frame in a video, to obtain a first feature includes: inputting the target video frame in the video into an information compression network in a pre-trained video matting model, to obtain the first image feature outputted by the information compression network, where the video matting model further includes: a first image generation network, a second image generation network, a result output network, and a plurality of groups of contour feature generation networks and transparency feature generation networks with a same quantity, each group of contour feature generation networks corresponding to a scale of contour mask images and including a first reconstruction sub-network and a first fusion sub-network, and each group of transparency feature generation networks corresponding to a scale of transparency mask images and including a second reconstruction sub-network and a second fusion sub-network;
the performing feature reconstruction based on a first target feature and a second target feature that is in the obtained feature of the contour mask image, to obtain a second image feature at an increased scale includes: inputting the first target feature and the second target feature in the obtained feature of the contour mask image into a target second reconstruction sub-network in a target transparency feature generation network, to obtain the second image feature at the increased scale outputted by the target second reconstruction sub-network, where a scale of a transparency mask image corresponding to the target transparency feature generation network is the same as the scale of the second image feature;
the fusing the second image feature with first sub-state information in the first hidden state information, and updating the first sub-state information, to obtain a third image feature includes: inputting the second image feature into a target second fusion sub-network in the target transparency feature generation network, so that the target second fusion sub-network fuses the second image feature with first sub-state information provided by the target second fusion sub-network and updates the first sub-state information, to obtain the third image feature outputted by the target second fusion sub-network;
the obtaining a target transparency mask image of the object edge in the target video frame based on the fusion result includes: inputting the fusion result into the second image generation network, to obtain a target transparency mask image of an object in a target video frame outputted by the second image generation network;
the performing feature reconstruction based on a third target feature, to obtain a fourth image feature at an increased scale includes: inputting the third target feature into a target first reconstruction sub-network in the target contour feature generation network, to obtain the fourth image feature at the increased scale outputted by the target first reconstruction sub-network, where a scale of a contour mask image corresponding to the target contour feature generation network is the same as the scale of the fourth image feature;
the fusing the fourth image feature with second sub-state information in second hidden state information, and updating the second sub-state information, to obtain the feature of the contour mask image of the object includes: inputting the fourth image feature into a target first fusion sub-network in the target contour feature generation network, so that the target first fusion sub-network fuses the fourth image feature with second sub-state information provided by the target first fusion sub-network and updates the second sub-state information, to obtain the feature of the contour mask image of the object outputted by the target first fusion sub-network;
the obtaining the first contour mask image of the object in the target video frame based on a feature obtained from final processing includes: inputting the feature obtained from final processing into the first image generation network, to obtain the first contour mask image of the object in the target video frame outputted by the first image generation network; and
the performing regional matting on the target video frame according to the target transparency mask image and the first contour mask image, to obtain a matting result includes: inputting the target transparency mask image and the first contour mask image into the result output network, so that the result output network performs regional matting on the target video frame based on the obtained image, to obtain the matting result outputted by the result output network.

With reference to the first aspect, in some embodiments, the transparency feature generation network further includes a feature selection sub-network;
before the inputting the first target feature and the second target feature in the obtained feature of the contour mask image into a target second reconstruction sub-network in a target transparency feature generation network, the method further includes: inputting the second target feature in the obtained feature of the contour mask image into a target feature selection sub-network in the target transparency feature generation network, to obtain a target selection feature that is in the second target feature outputted by the target feature selection sub-network and is representative of an edge contour of the object; and
the inputting the first target feature and the second target feature in the obtained feature of the contour mask image into a target second reconstruction sub-network in a target transparency feature generation network includes: inputting the first target feature and the target selection feature into the target second reconstruction sub-network in the target transparency feature generation network.

With reference to the first aspect, in some embodiments, the first fusion sub-network is a gated recurrent unit GRU or a long short-term memory LSTM unit; and/or the second fusion sub-network is a gated recurrent unit GRU or a long short-term memory LSTM unit; and/or the first reconstruction sub-network is implemented based on a QARepVGG network structure, or the first reconstruction sub-network in a particular contour feature generation network is implemented based on the QARepVGG network structure, where the particular contour feature generation network is a contour feature generation network corresponding to a contour mask image whose scale is smaller than a first preset scale; and/or the second reconstruction sub-network is implemented based on the QARepVGG network structure, or the second reconstruction sub-network in a particular transparency feature generation network is implemented based on the QARepVGG network structure, where the particular transparency feature generation network is a transparency feature generation network corresponding to a transparency mask image whose scale is smaller than a second preset scale.

With reference to the first aspect, in some embodiments, the video matting model is trained in the following manner:
inputting a first sample video frame in a sample video into an initial model of the video matting model for processing, to obtain a first sample contour mask image of the object in the first sample video frame outputted by the first image generation network in the initial model;
obtaining a first difference between an annotated mask image corresponding to the first sample video frame and an annotated mask image corresponding to a second sample video frame, where the second sample video frame is a video frame that is in the sample video and precedes the first sample video frame by a preset quantity of frames;
obtaining a second difference between the first sample contour mask image and a second sample contour mask image, where the second sample contour mask image is a mask image outputted by the first image generation network when the initial model processes the second sample video frame;
obtaining a third difference between a first sample transparency mask image and a second sample transparency mask image, where the first sample transparency mask image is a mask image outputted by the second image generation network when the initial model processes the first sample video frame, and the second sample transparency mask image is a mask image outputted by the second image generation network when the initial model processes the second sample video frame;
calculating a training loss based on the first difference, the second difference, and the third; and
performing model parameter adjustment on the initial model based on the training loss, to obtain the video matting model.

With reference to the first aspect, in some embodiments, the first sample contour mask image includes: a first mask sub-image identifying a region of the object in the first sample video frame and a second mask sub-image identifying a region outside the object in the first sample video frame; the second sample contour mask image includes: a third mask sub-image identifying a region of the object in the second sample video frame and a fourth mask sub-image identifying a region outside the object in the second sample video frame; and the obtaining a second difference between the first sample contour mask image and a second sample contour mask image includes: obtaining a difference between the first mask sub-image and the third mask sub-image, and obtaining a difference between the second mask sub-image and the fourth mask sub-image, to obtain the second difference including the obtained differences.

With reference to the first aspect, in some embodiments, the performing information compression on a target video frame in a video, to obtain a first feature includes: performing convolution transformation on the target video frame in the video, to obtain a fifth image feature; and performing linear transformation on the fifth image feature based on a convolution kernel, to obtain a sixth image feature; and performing batch normalization on the sixth image feature, to obtain a seventh image feature; performing nonlinear transformation on the seventh image feature, to obtain an eighth image feature; and performing linear transformation on the eighth image feature based on the convolution kernel, to obtain the first feature of the target video frame.

With reference to the first aspect, in some embodiments, the convolution kernel is a 1x1 convolution kernel; and/or the performing nonlinear transformation on the seventh image feature, to obtain an eighth image feature includes: performing nonlinear transformation on the seventh image feature based on a RELU activation function, to obtain the eighth image feature.

According to a second aspect, this application provides an electronic device. The electronic device includes a processor and a memory; where the memory is coupled to the processor, the memory is configured to store computer program code, the computer program code including computer instructions, and when the processor executes the computer instructions, the electronic device is caused to perform the method as described in the first aspect and any possible implementation in the first aspect.

According to a third aspect, an embodiment of this application provides a chip system. The chip system is applied to an electronic device, and the chip system includes one or more processors. The processors are configured to invoke computer instructions to cause the electronic device to perform the method as described in the first aspect and any possible implementation in the first aspect.

According to a fourth aspect, this application provides a computer-readable storage medium, including computer-executable instructions. When the foregoing executable instructions are run on an electronic device, the foregoing electronic device is caused to perform the method as described in the first aspect and any possible implementation in the first aspect.

### BRIEF DESCRIPTION OF DRAWINGS

FIG. 1 shows a setting interface for always on display according to an embodiment of this application;
FIG. 2 shows an overall process of a wallpaper display method according to an embodiment of this application;
FIG. 3A exemplarily shows a wallpaper according to an embodiment of this application;
FIG. 3B shows that a wallpaper according to an embodiment of this application is generated based on a video clip;
FIG. 4A shows a manner of sequentially arranging video frames respectively used for an AOD wallpaper, a lock screen wallpaper, and a home screen/desktop wallpaper;
FIG. 4B shows another manner of sequentially arranging the video frames respectively used for the AOD wallpaper, the lock screen wallpaper, and the home screen/desktop wallpaper;
FIG. 5 shows a method for fusing a wallpaper with a user interface according to an embodiment of this application;
FIG. 6 shows a process of a method for editing a wallpaper background (such as changing a background) according to an embodiment of this application;
FIG. 7 shows display of a new wallpaper at an AOD, lock screen, or home screen/desktop interface after a background is changed;
FIG. 8 shows a process of a method for editing a foreground (such as adding a decoration) according to an embodiment of this application;
FIG. 9 shows display of a new wallpaper at an AOD, lock screen, or home screen/desktop interface after a decoration is added to a subject;
FIG. 10A to FIG. 10H exemplarily show human-computer interaction for a user to select a video clip to generate a wallpaper;
FIG. 11A to FIG. 11D exemplarily show human-computer interaction for a user to edit a subject of a wallpaper;
FIG. 12A to FIG. 12E exemplarily show human-computer interaction for a user to edit a background of a wallpaper;
FIG. 13A to FIG. 13B exemplarily show human-computer interaction for a user to change a position of a subject;
FIG. 14A to FIG. 14B exemplarily show human-computer interaction for a user to change zooming percentages of a subject and a background of a wallpaper;
FIG. 15 shows a first video matting method according to an embodiment of this application;
FIG. 16 shows an image change according to an embodiment of this application;
FIG. 17 shows a second video matting method according to an embodiment of this application;
FIG. 18 shows a first feature processing method according to an embodiment of this application;
FIG. 19 shows a second feature processing method according to an embodiment of this application;
FIG. 20 shows a first cascaded feature reconstruction method according to an embodiment of this application;
FIG. 21 shows a second cascaded feature reconstruction method according to an embodiment of this application;
FIG. 22 shows a third video matting method according to an embodiment of this application;
FIG. 23 shows a structure of a first video matting model according to an embodiment of this application;
FIG. 24 shows a structure of an information compression network according to an embodiment of this application;
FIG. 25 shows a structure of a second video matting model according to an embodiment of this application;
FIG. 26 shows a fourth video matting method according to an embodiment of this application;
FIG. 27 shows a structure of a third video matting model according to an embodiment of this application;
FIG. 28 shows a structure of a fourth video matting model according to an embodiment of this application;
FIG. 29 shows a first model training method according to an embodiment of this application;
FIG. 30 shows a second model training method according to an embodiment of this application;
FIG. 31 shows a mask according to an embodiment of this application;
FIG. 32 shows a structure of a second image generation network according to an embodiment of this application;
FIG. 33 shows a comparison between matting results according to an embodiment of this application;
FIG. 34 shows an electronic device according to an embodiment of this application;
FIG. 35 shows a software system architecture applied to an electronic device according to an embodiment of this application; and
FIG. 36 shows a chip system according to an embodiment of this application.

### DESCRIPTION OF EMBODIMENTS

Terms used in the following embodiments of this application are merely intended to describe particular embodiments, but are not intended to limit this application.

As described in the background, an electronic device such as a mobile phone may provide wallpaper functions, to support a user to set wallpapers at AOD, a lock screen, a home screen/desktop, and the like. One wallpaper function can support the user to independently set wallpapers at multiple locations such as the AOD, the lock screen, and the home screen/desktop. However, the wallpapers at the multiple locations such as an AOD wallpaper, a lock screen wallpaper, and a home screen/desktop wallpaper are relatively separated, failing to provide a continuous display effect of the wallpapers. Another wallpaper function, also referred to as "super wallpaper" or "screen-off long-take animation", may provide a continuous and dynamic wallpaper display effect from the AOD to the lock screen and then to the home screen/desktop. However, a wallpaper transition effect is relatively rigid, limiting user experience.

Herein, the AOD interface is an interface displayed by the electronic device when the screen is turned off, and may be used for displaying information such as time, date, an SMS message, and an incoming call reminder, which may save user operations and is very intuitive and convenient. In this embodiment of this application, the AOD interface may further include an AOD wallpaper. To provide the AOD interface, the screen of the electronic device needs to have a pixel-level light-emitting capability, to support lighting up of only some pixels of the screen, for example, an organic light-emitting diode (organic light-emitting diode, OLED) screen. The lock screen interface is an interface displayed by the electronic device in a screen-on but non-unlocked state, and may include a system status bar, time, date, weather, a lock screen flag, an unlock prompt, icons of shortcut functions that do not need user authorization (such as a flashlight or a camera), and the like. The home screen/desktop is an interface displayed by the electronic device in a screen-on and unlocked state, may also be referred to as a main interface, and may include home screen/desktop icons of various application programs, a system status bar, and the like. Not limited to the home screen/desktop, the interface displayed by the electronic device in the screen-on and unlocked state may also be another interface, such as a user interface of an application or a user interface displayed in a previous unlocked state (before the screen is locked). The interfaces displayed in the screen-on and unlocked state are collectively referred to as an unlock interface.

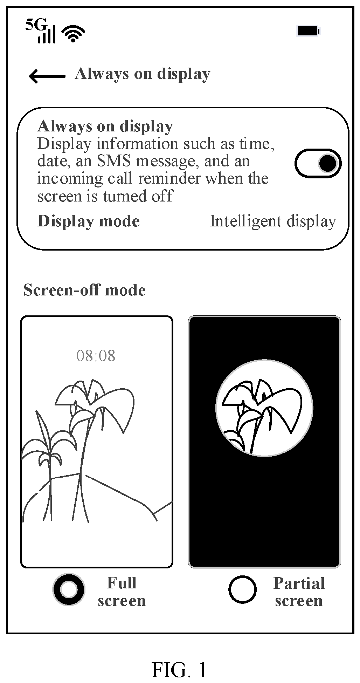

As shown in FIG. 1, the electronic device may provide an AOD function switch in a user interface of a setting application. For example, an "always on display" switch is provided in an "always on display" interface of the setting application. An interface representation of the AOD function switch, whether the AOD function switch may also appear in other application interfaces, and the like are not limited in this embodiment of this application. The user may choose, by operating the switch, whether to use an AOD function. When the AOD function switch is turned on, the electronic device may display the AOD interface when the screen is off; otherwise, the AOD interface is not displayed. As shown in FIG. 1, when the AOD function switch is turned on, the electronic device may alternatively display two screen-off modes of "full screen" and "partial screen" in the "always on display" interface. In the screen-off mode of "full screen", the AOD interface is displayed in an entire screen region in a dark-toned effect, to save power consumption of the screen. In the screen-off mode of "partial screen", the screen is only partially lighted up to display the AOD interface. In some embodiments, in the screen-off mode of "full screen", the AOD wallpaper on the AOD interface may be changed by setting a lock screen wallpaper. That is, image content of the AOD wallpaper is the same as that of the lock screen wallpaper.

An embodiment of this application provides a wallpaper display method, which can achieve a dynamic wallpaper display effect of a multi-level interface such as a continuous AOD to the lock screen and then to the home screen/desktop, without additionally designing, for the wallpaper, a transfer manner or a transition manner from the AOD to the lock screen and from the lock screen to the home screen/desktop. A transition effect therebetween is provided by a video and is more vivid and natural. Moreover, the wallpaper can be well fused with the AOD, lock screen, and home screen/desktop interfaces, and a subject in the wallpaper may not be obstructed by non-interactive elements such as time in the interfaces. In addition, the wallpaper may be generated based on a user-defined or editing operation, facilitating users to set personalized wallpapers and making user operations simple. One editing operation may take effect on an entire dynamic wallpaper.

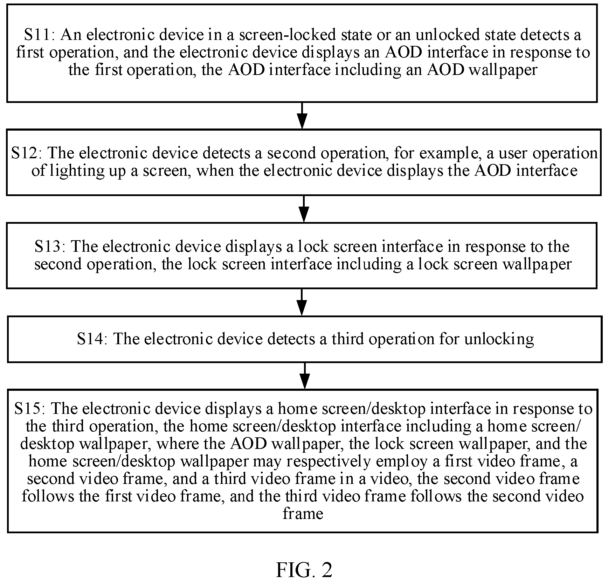

FIG. 2 shows an overall process of a wallpaper display method according to an embodiment of this application. As shown in FIG. 2, the method may include the following steps:
S11: An electronic device in a screen-locked state or an unlocked state detects a first operation, and the electronic device displays an AOD interface in response to the first operation. The AOD interface includes an AOD wallpaper. In addition to the AOD wallpaper, brief information such as date, time, and weather may also be displayed in the AOD interface.

The first operation may be a screen-off operation, for example, an operation of pressing a power button to turn off a screen is performed on the electronic device in the screen-locked state or the unlocked state. In both the screen-locked state and the unlocked state, the screen of the electronic device is in a lit-up state. In the screen-locked state, the lock screen interface is displayed on the screen, and in the unlocked state, the home screen/desktop interface or a user interface of an application opened by a user is displayed on the screen. Not limited to being triggered by the screen-off operation, the electronic device may also display the AOD interface if the user does not operate a mobile phone for a long time in the screen-locked state or the unlocked state.

S12: The electronic device detects a second operation, for example, a user operation of lighting up a screen, when the electronic device displays the AOD interface.

Specifically, the user operation of lighting up the screen within the AOD interface may be an operation of tapping the screen, an operation of pressing the power button, or the like, but is not limited thereto. The screen may alternatively be lit up within the AOD interface based on a scheduled time. The user may set a time for lighting up the screen, and the electronic device lights up the screen when the time arrives. The operation of lighting up the screen within the AOD interface is not limited in this embodiment of this application.

S13: The electronic device displays a lock screen interface in response to the second operation, the lock screen interface including a lock screen wallpaper.

S14: The electronic device detects a third operation for unlocking, the third operation unlocking the screen successfully.

S15: The electronic device displays a home screen/desktop interface in response to the third operation, the home screen/desktop interface including a home screen/desktop wallpaper.

The AOD wallpaper, the lock screen wallpaper, and the home screen/desktop wallpaper may respectively employ a first video frame, a second video frame, and a third video frame in a video, the second video frame follows the first video frame, and the third video frame follows the second video frame. As the user switches from the AOD interface to the lock screen interface and then to the home screen/desktop, a continuous and dynamic wallpaper playback picture is formed.

In this embodiment of this application, the AOD interface, the lock screen interface, and the home screen/desktop interface may be referred to as a first interface, a second interface, and a third interface respectively; and a video (or a video clip) used for generating a dynamic wallpaper may be referred to as a first video.

The AOD wallpaper, the lock screen wallpaper, and the home screen/desktop wallpaper may directly employ an original video frame in the first video, or may employ an image frame obtained after image processing, such as cropping or filtering, is performed on the original video frame.

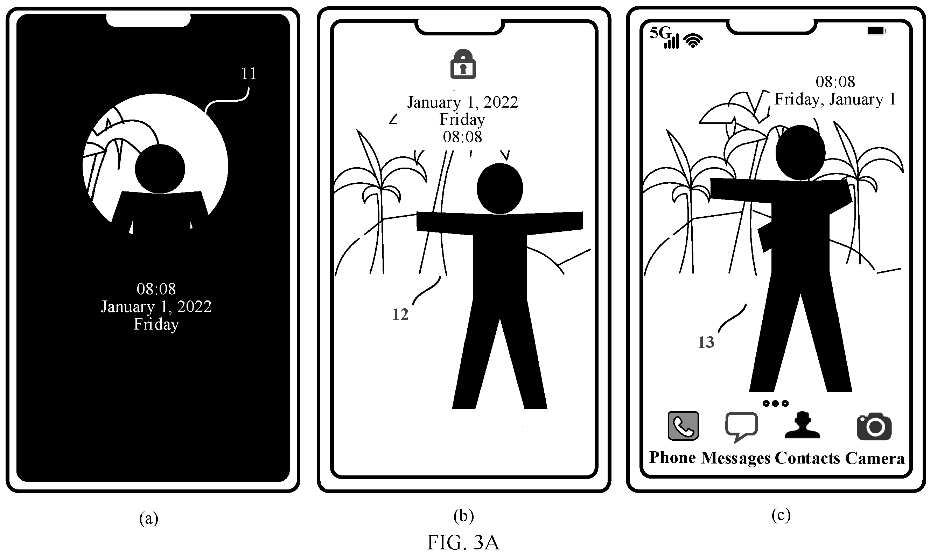

FIG. 3A exemplarily shows a wallpaper according to an embodiment of this application. As shown in FIG. 3A, (a), (b), and (c) respectively show display of an AOD wallpaper 11, a lock screen wallpaper 12, and a home screen/desktop wallpaper 13. The AOD wallpaper 11, the lock screen wallpaper 12, and the home screen/desktop wallpaper 13 are successively linked to each other to form a dynamic wallpaper. As shown in F FIG. 3A, from the AOD to the lock screen and then to the home screen/desktop, the AOD wallpaper 11, the lock screen wallpaper 12, and the home screen/desktop wallpaper 13 are linked and are no longer separated from each other.

The video clip used for generating the wallpaper may be selected by the user. For example, as shown in FIG. 3B, the user may select a video clip 14 to generate a wallpaper, and the video clip 14 is from a video 15. The video clip 14 may alternatively be selected from a live photo.

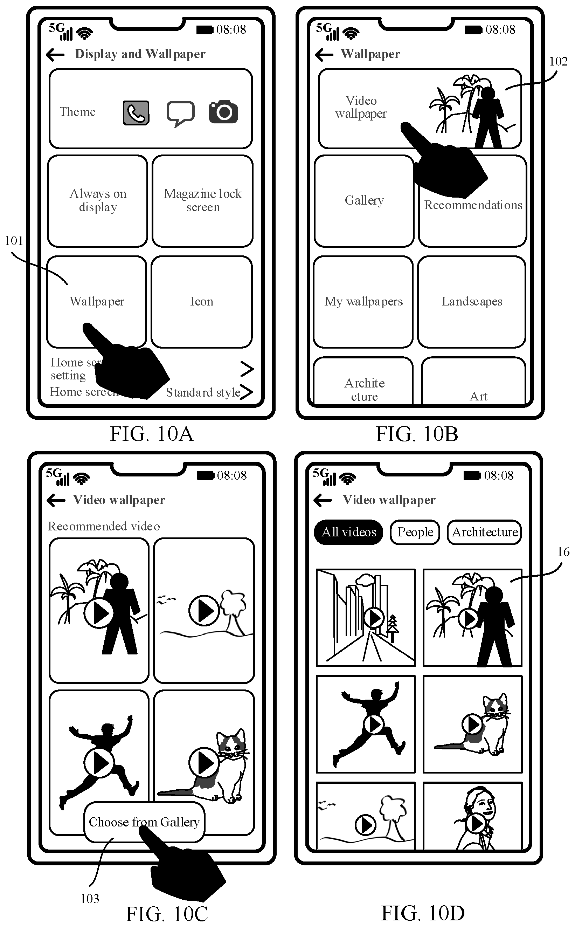

A human-computer interaction method for selecting a video clip by a user to generate a wallpaper may be described in detail in the following embodiments in FIG. 10A to FIG. 10H, which is not expanded herein.

Not limited to jumping from the AOD to the lock screen and then to the home screen/desktop, the wallpaper generated in this embodiment of this application may further be applied to another adjacent interface jump scenario, for example, jumping from the AOD to the home screen/desktop and then to some application interfaces, which may especially occur when the user has not set the lock screen, for example, jumping from the home screen/desktop to a main application interface and then to a secondary application interface. Certainly, the application interfaces may support wallpaper display, rather than application interfaces not suitable for wallpaper display, such as a game display interface and a video playback interface. For example, a chat wallpaper may be set in a chat interface of "WeChat". That is, the electronic device may sequentially display a plurality of user interfaces at different levels, and display wallpapers at the plurality of user interfaces. The wallpapers are generated based on the video clip selected by the user, and video frames used for the wallpapers at the plurality of user interfaces are arranged in sequence, so that when the user performs multi-level interface jump, a continuous and dynamic wallpaper display effect is achieved on the whole.

**A wallpaper display solution provided in this embodiment of this application is further described below in terms of wallpaper linkage, subject highlighting, background editing, and subject editing.**

### Wallpaper linkage

Since the video frames used for the wallpaper at the AOD interface, the lock screen interface, and the home screen/desktop are arranged in sequence, in this embodiment of this application, a transfer manner or a transition manner from the AOD to the lock screen and from the lock screen to the home screen/desktop does not need to be additionally designed for the wallpaper, and a transition effect therebetween is provided by the video clip and is more vivid and natural.

As an example, the video frames used for the wallpaper at the AOD interface, the lock screen interface, and the home screen/desktop in this application may be arranged in sequence in the following several manners:

### First implementation

The AOD wallpaper 11, the lock screen wallpaper 12, and the home screen/desktop wallpaper 13 may all be static wallpapers. That is, the video frame used for the AOD wallpaper, the video frame used for the lock screen wallpaper, and the video frame used for the home screen/desktop wallpaper are all single frames.

As shown in FIG. 4A, in a duration of the AOD interface (t1 to t2), the video frame used for the AOD wallpaper 11 is always a frame "1". For example, the AOD wallpaper 11 specifically employs only a face image in the frame "1". In a duration of the lock screen interface (t2 to t3), the video frame used for the lock screen wallpaper 12 is always a frame "2". In a duration of the home screen/desktop (t3 to t4), the video frame used for the home screen/desktop wallpaper 13 is always a frame "3". The frame "1", the frame "2", and the frame "3" are several video frames arranged in sequence in the video clip. The frame "1" precedes the frame "2", and the frame "2" precedes the frame "3".

A frame interval between the first video frame and the second video frame may be greater than a first frame interval, and a frame interval between the second video frame and the third video frame may be greater than a second frame interval. For example, the first video frame, the second video frame, and the third video frame may be extracted from the first video according to a frame interval (e.g., 1 second or more). In this way, pictures of the plurality of video frames may be different, and a dynamic change effect is presented in the case of continuous playback.

By using the first implementation, although the user sees a static wallpaper when staying at the AOD, the lock screen, or the home screen/desktop, as the user switches from the AOD to the lock screen and then to the home screen/desktop, the AOD wallpaper 11, the lock screen wallpaper 12, and the home screen/desktop wallpaper 13 are sequentially displayed in a linked manner. This may produce a continuous dynamic effect on the whole.

In addition, in this embodiment of this application, when the user reversely switches the interface, that is, switches from the home screen/desktop to the lock screen and then to the AOD interface, a continuous dynamic effect may also be produced on the whole.

### Second implementation

The AOD wallpaper 11, the lock screen wallpaper 12, and the home screen/desktop wallpaper 13 may be dynamic wallpapers separately. That is, the video frame used for the AOD wallpaper, the video frame used for the lock screen wallpaper, and the video frame used for the home screen/desktop wallpaper are all multi-frames.

When the user stays at a place such as the AOD, the lock screen, or the home screen/desktop, the electronic device plays a dynamic wallpaper at the place, and the wallpaper seen by the user is dynamic. To achieve a continuous dynamic effect from the AOD to the lock screen and then to the home screen/desktop on the whole, the video frames used for the AOD wallpaper 11, the lock screen wallpaper 12, and the home screen/desktop wallpaper 13 need to be connected end to end according to an interface switching time point. That is, in the case of switching from the AOD to the lock screen interface, a start frame used for the lock screen wallpaper 12 may be a next frame of an end frame used for the AOD wallpaper 11. When the lock screen interface is switched to the description interface, a start frame used for the home screen/desktop wallpaper 13 may be a next frame of an end frame used for the lock screen wallpaper 12. In other words, in two user interfaces at adjacent levels, a start video frame used for a wallpaper at a lower-level user interface may be a next frame of an end video frame used for a wallpaper at a higher-level user interface.

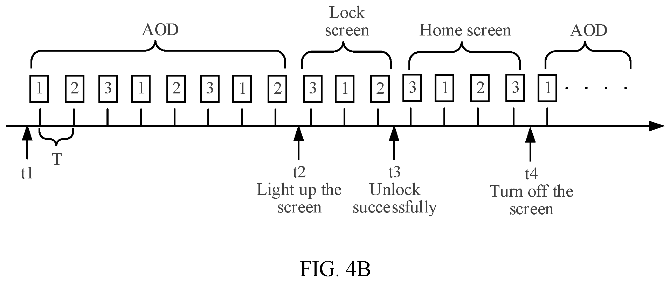

For example, it is assumed that the AOD wallpaper 11, the lock screen wallpaper 12, and the home screen/desktop wallpaper 13 are all generated by using the frame "1", the frame "2", and the frame "3". As shown in FIG. 4B, several stages and time points of a round of wallpaper display from the AOD to the lock screen and then to the home screen/desktop may be as follows:

From t1 to t2, the AOD wallpaper 11 is played. As shown in FIG. 4B, if t1 to t2 lasts for a long time and the user stays on the AOD interface for a long time and does not press the power button to light up the screen, the AOD wallpaper 11 may be played in a loop.

At t2, it is detected that the user switches from the AOD interface to the lock screen interface, playing of the AOD wallpaper 11 is ended, and playing of the lock screen wallpaper 12 is started. The start frame (for example, the frame "3") used for the lock screen wallpaper 12 may be a next frame of the end frame (for example, the frame "2") used for the AOD wallpaper 11.

From t2 to t3, the lock screen wallpaper 12 is played. As shown in FIG. 4B, if t2 to t3 is very short and the user performs quick unlocking and successfully enters the home screen/desktop, the lock screen wallpaper 12 is not played in a loop. Otherwise, the lock screen wallpaper 12 is played in a loop.

At t3, it is detected that the user switches from the lock screen interface to the home screen/desktop, playing of the lock screen wallpaper 12 is ended, and playing of the home screen/desktop wallpaper 13 is started. The start frame (for example, the frame "3") used for the home screen/desktop wallpaper 13 may be a next frame of the end frame (for example, the frame "2") used for the lock screen wallpaper 12.

From t3 to t4, the home screen/desktop wallpaper 13 is played. As shown in FIG. 4B, if t1 to t2 lasts for a long time and the user stays on the home screen/desktop for a long time and does not press the power button to turn off the screen, the AOD wallpaper 11 may be played in a loop.

At t4, it is detected that the user switches from the home screen/desktop to the AOD interface, playing of the home screen/desktop wallpaper 13 is ended, and playing of the AOD wallpaper 11 is started, thus entering a next round of wallpaper display. The start frame (for example, the frame "1") used for the AOD wallpaper 11 in the next round may be a next frame of the end frame (for example, the frame "3") used for the home screen/desktop wallpaper 13 in the previous round. Certainly, the user may alternatively switch from another application interface (for example, the video playback interface) to the AOD interface. In this case, the start frame used for the AOD wallpaper 11 in the next round may be the frame "1" by default, that is, a head frame in the video clip.

In addition, in this embodiment of this application, when the user reversely switches the interface, that is, switches from the home screen/desktop to the lock screen and then to the AOD interface, a continuous dynamic effect may also be produced on the whole. Specifically, the wallpapers may be connected end to end according to an interface switching time point. That is, in the case of switching from the home screen/desktop to the lock screen, a start frame used for the lock screen wallpaper may be a next frame of an end frame used for the home screen/desktop wallpaper. In the case of switching from the lock screen to the AOD, a start frame used for the AOD wallpaper may be a next frame of an end frame used for the lock screen wallpaper.

As shown in FIG. 4B, frame rates of the AOD wallpaper 11, the lock screen wallpaper 12, and the home screen/desktop wallpaper 13 may be the same. For example, the used video frame is changed twice per second. However, this application is not limited thereto, and the frame rates thereof may also be different. For example, a frame rate of an AOD dynamic wallpaper may be greater. For example, the used video frame is changed 5 times per second, to reduce a risk of damage to a fixed region of the screen due to long-term lighting. Originally, the AOD wallpaper 11 being dynamic can reduce this risk compared with the AOD wallpaper 11 being static. In FIG. 4A and FIG. 4B, "T" indicates a screen refresh rate. FIG. 4A and FIG. 4B are merely examples. A wallpaper frame rate may actually be greater than T. For example, the video frame used for the wallpaper is changed every 10 T. Moreover, a duration of the AOD may be much greater than several T. Based on a human reaction delay and an operation delay, durations of the lock screen wallpaper and the home screen/desktop wallpaper may also be far greater than several T.

### Subject highlighting

In this embodiment of this application, the wallpaper can be well fused with the AOD, lock screen, and home screen/desktop interfaces, and a subject (e.g., a person) in the wallpaper may not be obstructed by non-interactive elements such as time in the AOD, lock screen, and home screen/desktop interfaces.

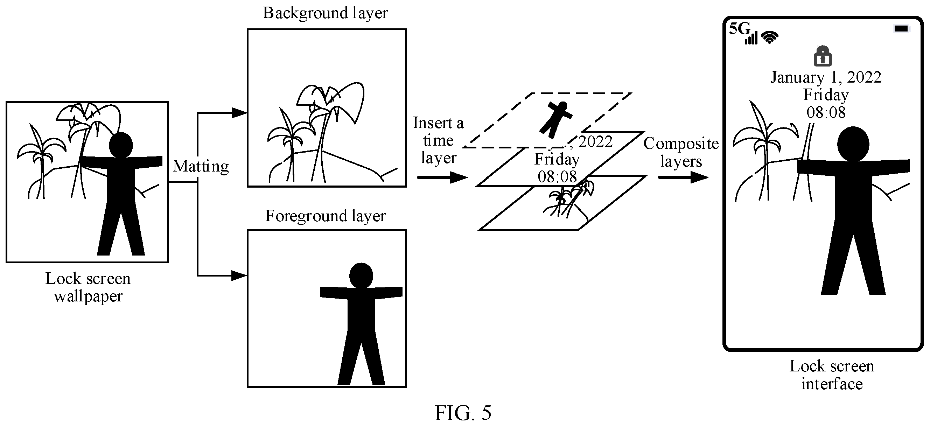

FIG. 5 shows a method for fusing a wallpaper with a user interface according to an embodiment of this application. As shown in FIG. 5, the electronic device may first complete matting for a subject on a video clip used for generating a wallpaper, to separate the subject from a background thereof to obtain a foreground layer and a background layer. The foreground layer may be a layer of the subject (e.g., a person), and the background layer is a layer of image content other than the subject. Then, the electronic device may insert layers of non-interactive elements such as time between the foreground layer and the background layer, composite these layers, and render an AOD, lock screen, or home screen/desktop interface. In this way, an image of the subject may be displayed above the non-interactive elements such as time, and may not be obstructed by the non-interactive elements such as time, which can better highlight prominence of the subject in the wallpaper.

Layers of interactive elements in the AOD, lock screen, and home screen/desktop interfaces, such as layers of a fingerprint unlock key in the AOD interface, a password keypad in the lock screen interface, and an application icon in the home screen/desktop, may be displayed above the foreground layer, facilitating the user to operate the interactive elements, thereby ensuring implementation of an interface interaction function. That is, layers of the AOD, lock screen, and home screen/desktop interfaces may be decomposed into layers of non-interactive elements and layers of interactive elements.

For how to perform matting for a subject on a video, refer to subsequent embodiments. Details are not described herein.

In addition to that the subject is not obstructed by the non-interactive elements such as time, based on matting, the electronic device can further provide a background editing function and a foreground editing function.

### Background editing

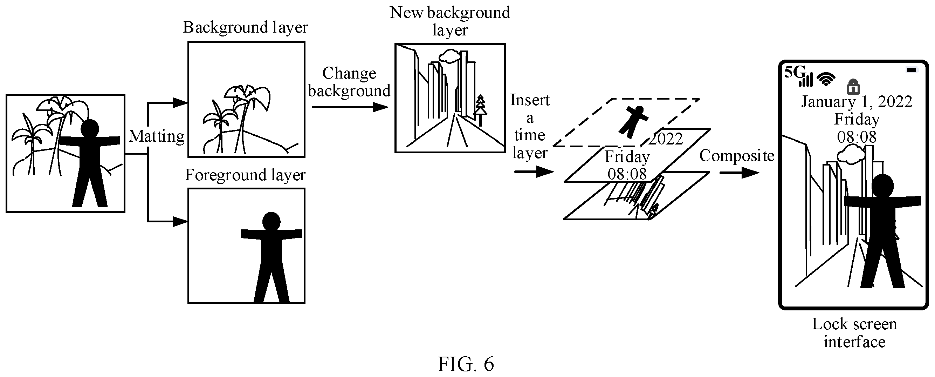

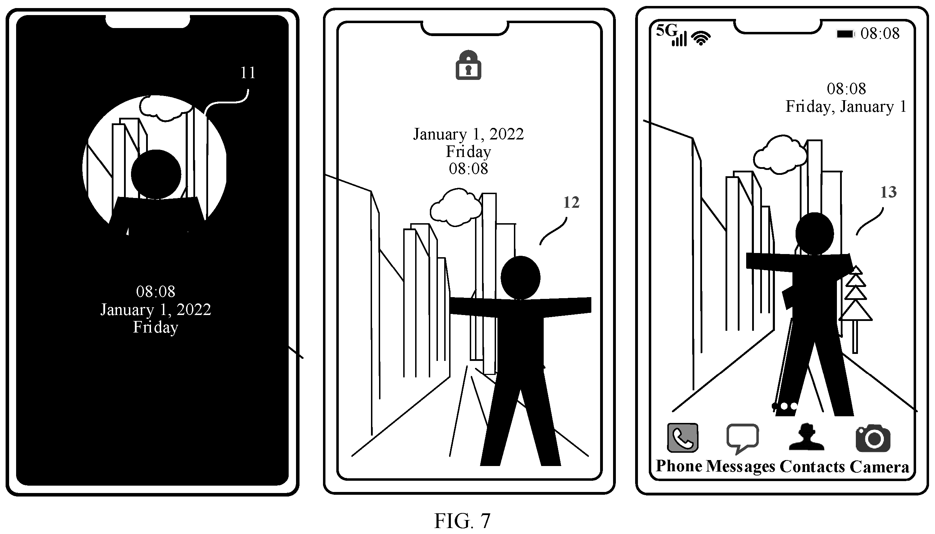

FIG. 6 shows a process of a method for editing a wallpaper background (such as changing a background) according to an embodiment of this application. As shown in FIG. 6, after obtaining a foreground layer and a background layer of a wallpaper by matting, the electronic device may replace the background layer, then insert layers of non-interactive elements such as time between the foreground layer and the background layer, composite these layers, and render an AOD, lock screen, or home screen/desktop interface with a replaced wallpaper background. Later, as shown in FIG. 7, background replacement is completed on the wallpaper displayed at the AOD, lock screen, or home screen/desktop interface.

Further, to simplify an editing operation and improve background editing efficiency, after detecting that the user performs background editing on a wallpaper at a user interface (such as the lock screen interface), the electronic device may synchronously apply the editing to the wallpaper at another user interface, that is, also perform a same editing operation on a wallpaper background at the another user interface, so that one editing operation takes effect on the entire wallpaper. Herein, the another user interface refers to a user interface in multi-level user interfaces (such as the AOD interface, the lock screen interface, and the home screen/desktop) that can display the wallpaper other than the user interface (such as the lock screen interface) receiving an editing operation. In other words, the editing operation implemented by the user may be an operation that the user selects, at a user interface of the multi-level user interfaces, a wallpaper background to perform background editing. Not limited to updating the wallpaper background at the user interface, the electronic device may further update a background image at another user interface. That is, in response to an operation that the user edits a wallpaper background at a user interface, the electronic device may update wallpaper background images at the multi-level user interfaces.

Not limited to replacing the background, editing the background may further include changing a zooming percentage of the background, blurring the background, vignetting the background, changing a color and brightness of the background, and the like. The electronic device may perform corresponding image processing on the background layer separately, such as image scaling, image blurring, image vignetting, adjusting image brightness, and changing an image color, to update the background layer, thereby obtaining a new wallpaper, and apply the new wallpaper to the AOD interface, the lock screen interface, and the home screen/desktop. Herein, the application may specifically mean performing image composition on a background layer and a foreground layer of the new wallpaper and the non-interactive element layers and the interactive element layers of the AOD interface, the lock screen interface, and the home screen/desktop, and rendering pictures of the new wallpaper displayed at the interfaces.

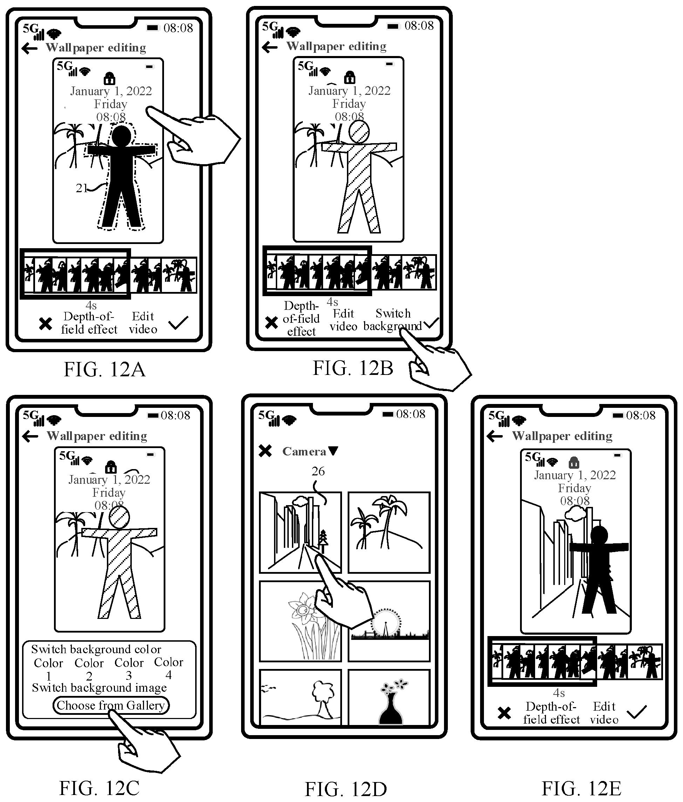

A human-computer interaction method for the user to edit a background of a wallpaper may be exemplarily described later in embodiments in FIG. 12A to FIG. 12E. Details are not expanded herein.

### Subject editing

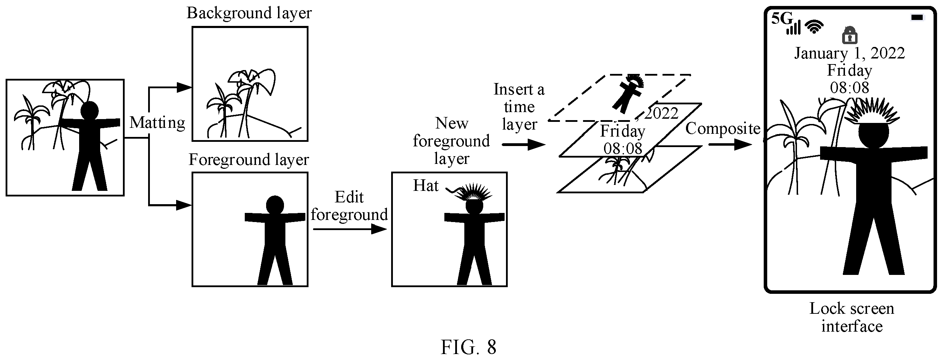

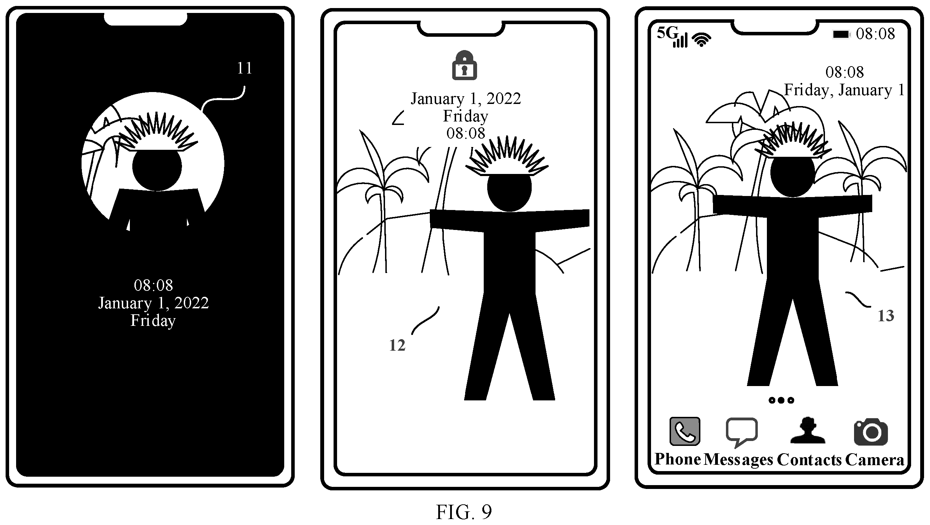

FIG. 8 shows a process of a method for editing a foreground (such as adding a decoration) according to an embodiment of this application. As shown in FIG. 8, after obtaining a foreground layer and a background layer of a wallpaper by matting, the electronic device may add an image of a decoration (such as a hat) to the foreground layer to obtain a new foreground layer, then insert layers of non-interactive elements such as time between the foreground layer and the background layer, composite these layers, and render an AOD, lock screen, or home screen/desktop interface with a decorated wallpaper subject. Later, as shown in FIG. 9, subject decoration is implemented for the wallpaper displayed at the AOD, lock screen, or home screen/desktop interface. Adding a decoration to the subject may be specifically implemented by layer composition. For example, a decoration layer is composited with the foreground layer to generate a new foreground layer.

Further, to simplify an editing operation and improve subject editing efficiency, after detecting that the user performs subject editing on a wallpaper at a user interface (such as the lock screen interface), the electronic device may synchronously apply the editing to the wallpaper at another user interface, that is, also perform a same editing operation on a wallpaper foreground object at the another user interface, so that one subject editing operation takes effect on the entire wallpaper. Herein, the another user interface refers to a user interface in multi-level user interfaces (such as the AOD interface, the lock screen interface, and the home screen/desktop) that can display the wallpaper other than the user interface (such as the lock screen interface) receiving an editing operation. In other words, the editing operation implemented by the user may be an operation that the user selects, at a user interface of the multi-level user interfaces, a wallpaper subject to perform subject editing. Not limited to updating the wallpaper subject at the user interface, the electronic device may further update a subject image at another user interface. That is, in response to an operation that the user edits a wallpaper subject at a user interface, the electronic device may update wallpaper subject images at the multi-level user interfaces.

Not limited to adding a decoration, editing the foreground may further include changing a zooming percentage of the subject, changing a position of the subject, changing a color and brightness of the subject, or the like. The electronic device may perform corresponding image processing on the foreground layer separately, such as image scaling, changing a position of a subject image in the foreground layer, adjusting image brightness, and changing an image color, to update the foreground layer including the subject image, thereby obtaining a new wallpaper, and apply the new wallpaper to the AOD interface, the lock screen interface, and the home screen/desktop.

A human-computer interaction method for the user to edit a subject may be exemplarily described later in embodiments in FIG. 11A to FIG. 11D. Details are not expanded herein.

The electronic device may further edit the wallpaper on the whole, for example, add a filter and change zooming percentages of the subject and the background thereof. Editing on the whole means that an editing effect takes effect on the entire wallpaper and is not limited to the foreground or the background. For example, during layer composition, a filter layer is added above a wallpaper background layer, a non-interactive element layer of the lock screen interface, a wallpaper foreground layer, and an interactive element layer of the lock screen interface, so that a filter effect takes effect on the entire lock screen wallpaper. In another example, the subject and the background thereof are scaled according to a selected zooming percentage, to obtain a new foreground layer and a new background layer which are then composited with the layer of the lock screen interface, so that the subject in the lock screen wallpaper and the background thereof are scaled synchronously.

A series of human-computer interaction methods provided in the embodiments of this application are described below based on the wallpaper display solution described above.

FIG. 10A to FIG. 10H exemplarily show human-computer interaction for a user to select a video clip to generate a wallpaper.

Firstly, the electronic device may display a "home screen/desktop and wallpaper" setting interface shown in FIG. 10A, and provide setting options such as "wallpaper" in the interface. After detecting that the user selects a setting option "wallpaper" 101, the electronic device may display a "wallpaper" setting interface shown in FIG. 10B, and provide a wallpaper setting option such as "video wallpaper" 102 in the interface. In this specification, the "video wallpaper" is merely a name and refers to a wallpaper setting function for generating a wallpaper by using a video, and a name thereof is not limited. After detecting that the user selects the option "video wallpaper" 102, the electronic device may display a "video wallpaper" setting interface shown in FIG. 10C, and display some recommended videos in the interface. The recommended videos may be from a gallery, from a network, or some videos pre-stored locally. To enrich user choices, the electronic device may further provide a gallery entry "Choose from Gallery" 103 in the "video wallpaper" setting interface shown in FIG. 10C. In technical implementation, the gallery entry may be a control (such as a key), a link, or other types of interface interactive elements. After detecting that the user clicks/taps the gallery entry, the electronic device may display an interface shown in FIG. 10D and displays, in the interface, videos in the gallery. To further facilitate the user to make choices, in the interface shown in FIG. 10D, videos in the gallery may be classified, for example, "People" and "Architecture".

The user may select, from a plurality of videos, a video 16 used for generating a wallpaper. Once detecting an operation that the user selects the video 16, the electronic device may display a "video wallpaper preview" interface shown in FIG. 10E.

As shown in FIG. 10E, a preview 17 may be displayed in the "video wallpaper preview" interface. The preview 17 may be used for displaying display states of the AOD wallpaper, the lock screen wallpaper, and the home screen/desktop wallpaper respectively at the AOD, lock screen, and home screen/desktop interfaces. The preview may be a video. As shown in FIG. 10F to FIG. 10H, when the video is played back, a dynamic wallpaper display process from the AOD to the lock screen and then to the home screen/desktop may be presented. The video may include a plurality of frames of images. A previous image frame may present a display state of the wallpaper at the AOD interface, an intermediate image frame may present a display state of the wallpaper at the lock screen interface, and a subsequent image frame may present a display state of the wallpaper at the home screen/desktop.

Further, the preview may also present a reverse dynamic display process of the wallpaper from the home screen/desktop to the lock screen and then to the AOD.

As shown in FIG. 10E, the "video wallpaper preview" interface may further include: a video frame sequence 18 of the selected video 16 and a selection box 19. Video frames in the video frame sequence may be presented in the form of video frame thumbnails. A video in the selection box 19 is a selected first video, and the first video may be part or all of the video 16. In this embodiment of this application, the "video wallpaper preview" interface may be referred to as a fourth interface, and the video 16 may be referred to as a second video. The user may slide the selection box 19 along the video frame sequence 18 to change a selected video clip. A length of the selection box 19 may be fixed. For example, a video clip with a length of 240 frames or a length of 4 seconds is fixedly selected. The length of the selected video clip may alternatively be variable. The selected video clip is at least longer than a sum of a frame interval 1 and a frame interval 2, so that three video frames at longer intervals can be selected from the video clip to be respectively used for the AOD wallpaper, the lock screen wallpaper, and the home screen/desktop wallpaper. In this way, the plurality of video frames differ in pictures, presenting a dynamic change effect when consecutively played back. The frame interval 1 is a frame interval between video frames respectively used for the AOD wallpaper and the lock screen wallpaper, and the frame interval 2 is a frame interval between video frames respectively used for the lock screen wallpaper and the home screen/desktop wallpaper. Not limited to the selection box 19, an interface interactive element used for selecting the video clip from the video frame sequence 18 may alternatively be in other styles. Alternatively, there is no need to design a special control for the user to select a video clip, and the user may specify a video clip by directly continuously selecting a plurality of consecutive frames in the video frame sequence 18.

The above content indicates that the first video may be selected by the user from gallery videos. Not limited to this, the setting application may also provide a video used for generating a wallpaper, and the first video may be a video selected by the user from videos provided by the setting application. The first video may alternatively be provided by a system without any user operation.

As shown in FIG. 10E, the "video wallpaper preview" interface may further include: a cancel control 20, a complete control 21, a "depth-of-field effect" control, an "edit" control, and the like. The cancel control 20 may be configured for the user to cancel generation of a wallpaper from a video clip in the selection box 19. The complete control 21 may be configured for the user to confirm generation of a wallpaper from a video clip in the selection box 19. The "depth-of-field effect" control may be configured for the user to adjust a depth of field of the wallpaper. The "edit" control may be an entry for wallpaper editing. By using the entry, the user may perform a series of wallpaper editing operations, such as adding a decoration to a subject and changing a background. Wallpaper editing will be described in the following embodiments in FIG. 11A to FIG. 11D and FIG. 12A to FIG. 12E. Details are not expanded herein.

After the electronic device detects that the user changes the video clip used for generating the wallpaper, for example, changes the selected video clip by sliding the selection box 19, the electronic device may generate a new wallpaper based on a new video clip and update the preview 17. The updated preview 17 may be used for displaying display states of the new wallpaper at the AOD, lock screen, and home screen/desktop interfaces. Specifically, when the updated preview 17 is played, a dynamic display process of the new wallpaper from the AOD to the lock screen and then to the home screen/desktop may be displayed. In this way, it may be convenient for the user to learn a dynamic display effect of the new wallpaper in time, facilitating the user to make a wallpaper that the user likes.

Not limited to user selection, the video clip used for generating the wallpaper may also be default. For example, by default, first three video frames of the selected video constitute the video clip, or the video clip used for generating the wallpaper may include several video frames before and after a highlight video frame (including the highlight frame). How to identify the highlight video frame from the video is not limited in this embodiment of this application.

After the wallpaper is updated by changing the video clip, when the AOD, the lock screen, and the home screen/desktop are displayed again, the electronic device may apply a new wallpaper to the interfaces. That is, the updated wallpaper may also be displayed at the AOD, the lock screen, and the home screen/desktop, so as to ultimately achieve a purpose of changing the wallpaper.

FIG. 11A to FIG. 11D exemplarily show a human-computer interaction method for a user to edit a subject of a wallpaper.

Firstly, the electronic device may display a "wallpaper editing" interface shown in FIG. 11A, and display a preview 23 in the interface. In this embodiment of this application, the "wallpaper editing" interface may be referred to as a fifth interface. Like the preview 17 above, the preview 23 may be used for presenting display states of the AOD wallpaper, the lock screen wallpaper, and the home screen/desktop wallpaper respectively at the AOD, lock screen, and home screen/desktop interfaces. The preview 23 may be a video. A dynamic display process from the AOD to the lock screen and then to the home screen/desktop may be presented when the video is played back. In addition, in the preview 23, the subject of the wallpaper and the background thereof may be separately displayed, as indicated by a mark 24. In this way, the user may select the subject or the background for editing. The "separately displayed" is implemented based on matting for the subject on the video clip used for generating the wallpaper.

Specifically, the mark 24 may be a highlighted dividing line designed along a boundary of the subject, a translucent layer overlaid on the subject and having a dynamic effect, or the like. An interface representation of the mark 24 is not limited in this embodiment of this application.

The user may click/tap the "edit" control in the interface shown in FIG. 10E to enter the "wallpaper editing" interface shown in FIG. 11A. Not limited thereto, an entry to the "wallpaper editing" interface may alternatively be disposed at another position, which is not limited in this embodiment of this application.

As shown in FIG. 11A to FIG. 11B, in a state in which the subject of the wallpaper and the background thereof are separately displayed, the electronic device may detect an operation that the user selects the subject, and in response, provide an editing option of "Decorate". The electronic device may further detect an operation that the user clicks/taps the "decorate" editing option, and in response, may display one or more decorations as shown in FIG. 11C, for example, "Element 1", "Element 2", "Element 3", and "Element 4" shown in FIG. 11C.

Subsequently, the electronic device may detect an operation that the user adds a decoration (such as "Element 1") to the subject, and in response, the electronic device may generate a new wallpaper and update the preview 23 as shown in FIG. 11D. A decoration selected by the user is added to a subject in the new wallpaper. The updated preview 23 may be used for displaying display states of the new wallpaper at the AOD, lock screen, and home screen/desktop interfaces. Further, the user may further adjust a position of the decoration, for example, move a "hat" to the top of a head of a person.

Further, to simplify an editing operation and improve subject editing efficiency, after detecting an operation that the user adds a decoration to a subject of a wallpaper (e.g., the AOD wallpaper, the lock screen wallpaper, or the home screen/desktop wallpaper), the electronic device may synchronously apply the editing to another wallpaper, that is, also add a decoration to a subject of the another wallpaper, so that one subject editing operation takes effect on the entire wallpaper.

After the decoration is added to the subject of the wallpaper, the electronic device may apply a new wallpaper, in which a decoration is added to the subject, to the AOD, lock screen, and home screen/desktop interfaces when displaying the interfaces again. That is, the new wallpaper may also be displayed at the AOD, the lock screen, and the home screen/desktop, so as to ultimately achieve a purpose of adding the decoration to the subject of the wallpaper.

Not limited to adding a decoration to the subject, selecting the subject for subject editing may further include an editing operation such as replacing the subject or adding a filter to the subject.

FIG. 12A to FIG. 12E exemplarily show a human-computer interaction method for a user to edit a background of a wallpaper.

The electronic device may display a "wallpaper editing" interface shown in FIG. 12A. For implementation thereof, refer to the relevant description of the interface shown in FIG. 11A. Details are not described herein again.

As shown in FIG. 12A to FIG. 12B, in a state in which the subject of the wallpaper and the background thereof are separately displayed, the electronic device may detect an operation that the user selects the background of the wallpaper, and in response, provide an editing option of "Switch Background". The electronic device may further detect an operation that the user clicks/taps the editing option of "Switch Background", and in response, as exemplarily shown in FIG. 12C, provide background editing options such as "Switch Background Color" and "Switch Background Image", and provide background color options such as "Color 1", "Color 2", "Color 3", and "Color 4" and a background image switching option of "Choose from Gallery".

Subsequently, the electronic device may detect that the user selects the option of "Choose from Gallery", and display a gallery invocation interface shown in FIG. 12C. Photos in the gallery are displayed in the interface. As shown in FIG. 12D, the electronic device may further detect an operation that the user selects a photo 26 as a new background of the wallpaper, and in response, generate a new wallpaper based on the new background and update the preview 23 as exemplarily shown in FIG. 12E. The background of the new wallpaper is replaced. The updated preview 23 may be used for displaying a display state of the new wallpaper at the AOD, lock screen, and home screen/desktop interfaces.

After the background of the wallpaper is replaced, the electronic device may apply a new wallpaper with the replaced background to the AOD, lock screen, and home screen/desktop interfaces when displaying the interfaces again. That is, the new wallpaper may also be displayed at the AOD, the lock screen, and the home screen/desktop, so as to ultimately achieve a purpose of replacing the background of the wallpaper.

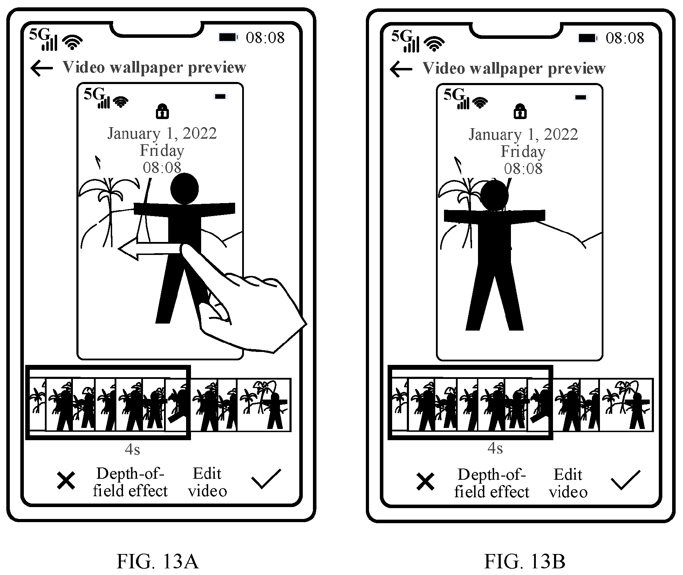

In addition, the electronic device may detect an operation that the user adjusts a position of the subject relative to the background, for example, drags the subject to the left as exemplarily shown in FIG. 13A, and in response, generate a new foreground layer based on the subject with the updated position, thereby generating a new wallpaper. As exemplarily shown in FIG. 13B, a position of the subject in the new wallpaper is the adjusted position. After the position of the subject in the wallpaper is changed, the electronic device may apply the new wallpaper, in which the position of the subject is changed, to the AOD, lock screen, and home screen/desktop interfaces when displaying the interfaces again. That is, the new wallpaper may also be displayed at the AOD, the lock screen, and the home screen/desktop, so as to ultimately achieve a purpose of changing the position of the subject in the wallpaper.

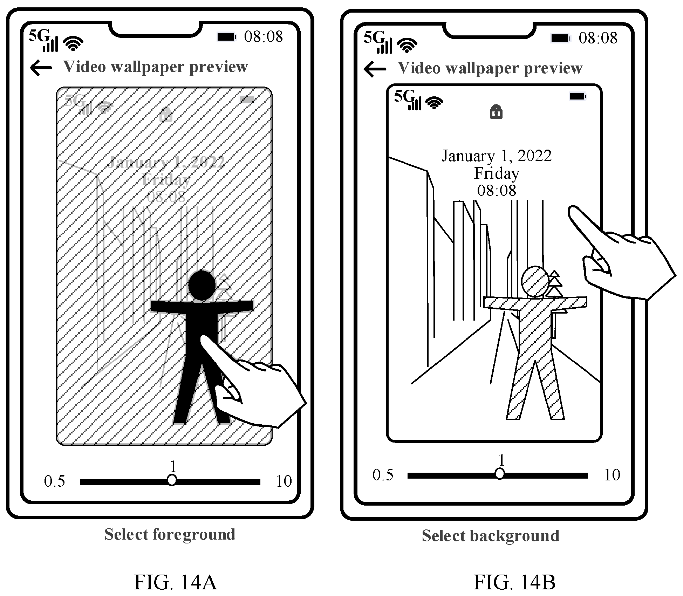

The electronic device may further detect an operation that the user adjusts a zooming percentage of the subject or the background of the wallpaper. As exemplarily shown in FIG. 14A, when the subject is selected, a slider is dragged to change the zooming percentage of the subject, and as exemplarily shown in FIG. 14B, when the background is selected, the slider is dragged to change the zooming percentage of the subject. In response, the electronic device may generate a new foreground layer or background layer based on the zooming percentage selected by the user, thereby generating a new wallpaper. Not limited to those shown in FIG. 14A and FIG. 14B, the electronic device may further detect an operation that the user simultaneously adjusts the zooming percentages of the subject and the background, for example, zooming in the subject and zooming out the background to create a cinematic visual effect, and in response, simultaneously update the foreground layer and the background layer and generate a new wallpaper based on a new foreground layer and a new background layer. After the zooming percentages of the subject and the background in the wallpaper are changed, when the AOD, the lock screen, and the home screen/desktop are displayed again, the electronic device may apply the new wallpaper, in which the zooming percentages of the subject and the background are changed, to the interfaces. That is, the new wallpaper may also be displayed at the AOD, the lock screen, and the home screen/desktop, so as to ultimately achieve a purpose of changing the zooming percentages of the subject and the background in the wallpaper.

An embodiment of this application further provides a video matting method, to complete matting for a subject on a video clip used for generating a wallpaper, thereby separating the subject from a background thereof, and then insert layers of non-interactive elements such as time between a foreground layer and a background layer, which prevents obstruction of an image of the subject by non-interactive elements such as time and can better highlight prominence of the subject in the wallpaper.

The video matting method provided in this embodiment of this application can further improve accuracy of video matting.

Firstly, a video matting process is described.

A video includes a plurality of video frames. A to-be-matted video frame is referred to as a target video frame. In this way, the target video frame may be any video frame in the video that requires matting. Video matting refers to a process of extracting, from the video frame, an object region with object transparency in which an object is located. The foregoing object may be a person, an animal, a vehicle, a lane line, or the like.

During the video matting, firstly, a first target video frame is determined. The first target video frame may be a first video frame or another video frame in the video, and matting is performed on the determined target video frame to obtain an object region in the target video frame. Then, a next video frame of the target video frame is determined as a new target video frame, and matting is performed on the new target video frame. In this way, each time the object region in the target video frame is obtained, a next video frame is determined as a new target video frame until a segmentation result for a final video frame of the video is obtained, thereby completing object-specific matting for the entire video.

Application scenarios of a video matting solution provided in this embodiment of this application are illustrated below.

### 1. Real-time video scenario

In this scenario, video matting is performed on a to-be-played video, to obtain object regions in respective video frames in the video. In this way, during video playback, only region content of the object regions in the video frames in the video may be played back.

### 2. Video clipping scenario

In this scenario, after video segmentation is performed on a video to obtain regions of an object in respective video frames in the video, clipping processing such as background replacement, object erasure, background vignetting, and color retention may be performed on the video frames in the video according to information such as positions of the regions of the object in the video frames, thereby obtaining a new video. In addition, after clipping processing is performed on the video frames in the video to obtain a new video, other applications may also be implemented based on the new video, such as video creation or terminal screen locking.

In a scenario in which the new video obtained by video clipping is applied to the terminal screen locking, after video segmentation is performed on the video to obtain regions of the object in respective video frames in the video and a new video is obtained by clipping the video according to information of the regions of the object in the video frames, a dynamic lock screen wallpaper of a terminal may be generated according to picture content of the video frames in the new video, so that the dynamic lock screen wallpaper is displayed when the terminal is in a screen-locked state.

### 3. Video surveillance scenario

In this scenario, after capturing a video of a particular region, a surveillance device may perform video matting on the video, to detect an object in the particular region.

Next, a video segmentation solution provided in this embodiment of this application is described in detail below by using specific embodiments.

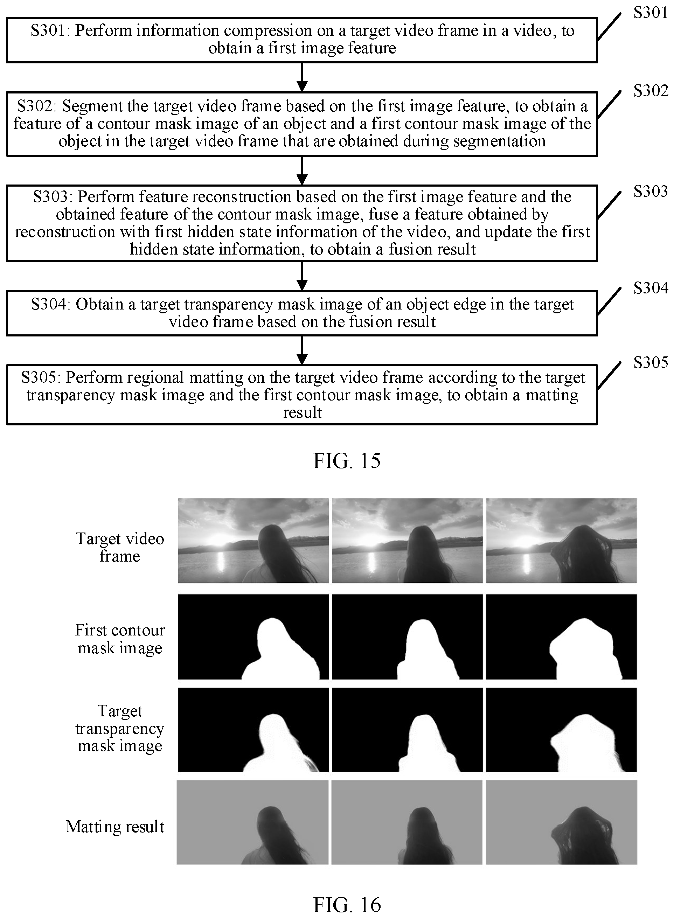

In an embodiment of this application, FIG. 15 is a schematic flowchart of a first video matting method. In this embodiment, the foregoing method includes the following steps S301 to S305.

Step S301: Perform information compression on a target video frame in a video, to obtain a first image feature.

The target video frame may be any of video frames included in the video.

The performing information compression on the target video frame may be understood as: performing feature extraction on the target video frame, to obtain a first image feature whose scale is smaller than that of the target video frame. By performing feature extraction on the target video frame, edge information of content in the image may be extracted. The edge information can reflect regions of an object in the video frames.

In addition, when feature extraction is performed on the target video frame, cascaded feature extraction may be performed multiple times. As a quantity of times of feature extraction increases, a scale of an obtained feature becomes smaller. From the perspective of scales, a larger scale of the first image feature indicates more detailed edge information included. In some cases, excessive detailed edge information is not conducive to determining the regions of the object in the video frames. On the contrary, a smaller scale of the first feature indicates more macro edge information included, which is more conducive to determining the regions of the object in the video frames.

In addition, a dimension of the foregoing first image feature may be the same as that of the target video frame. That is, the target video frame is a two-dimensional image, so the dimension thereof is 2, then the first image feature may also be 2-dimensional data. In this case, the first image feature may also be considered as a feature map.

In an embodiment of this application, information compression on the target video frame may be implemented based on an encoding manner, for example, based on an encoding network.

In another embodiment of this application, information compression may be performed on the target video frame by performing convolution transformation on the target video frame. During convolution transformation on the target video frame, convolution transformation may be performed on the target video frame multiple times, thereby continuously reducing a scale of a feature obtained by convolution transformation.

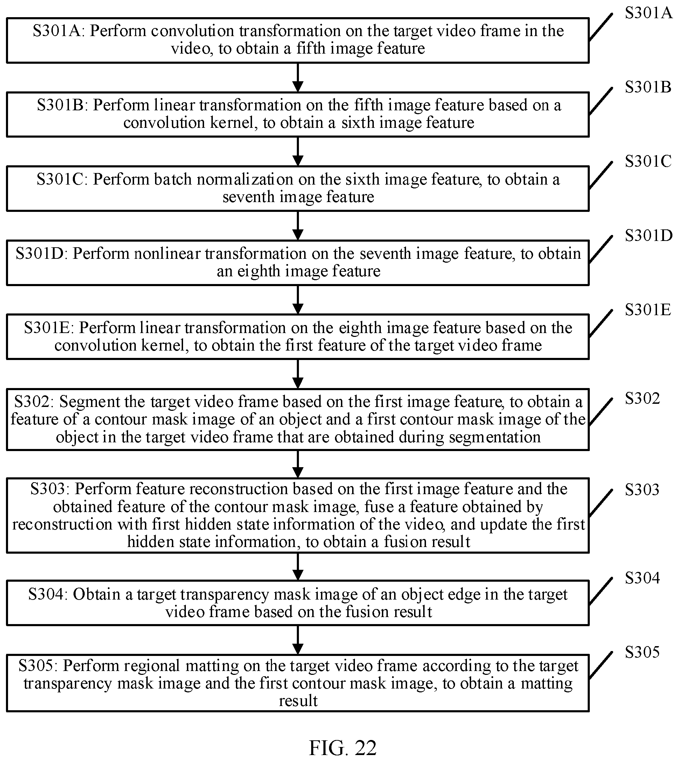

In addition, information compression may alternatively be performed on the target video frame with reference to processing such as convolution transformation, linear transformation, batch normalization processing, and nonlinear transformation. Refer to steps S301A to S301E in the following embodiment shown in FIG. 22. Details are not described herein.

Step S302: Segment the target video frame based on the first image feature, to obtain a feature of a contour mask image of an object and a first contour mask image of the object in the target video frame that are obtained during segmentation.

The foregoing first contour mask image is obtained by segmenting the target video frame. Therefore, a correspondence exists between pixels in the first contour mask image and pixels in the target video frame. The first contour mask image may be understood as a binary image indicating a position of a region of the object in the target video frame. The region of the object indicated by the first contour mask image is determined based on a general contour of the object. Therefore, the region of the object may be considered as a general region of the object.

For example, the first contour mask image may be a mask image including pixels having two pixel values of 0 and 1. In the target video frame, a pixel corresponding to the pixel whose pixel value is 1 in the first contour mask image may be a pixel in the region of the object, and a pixel corresponding to the pixel whose pixel value is 0 in the first contour mask image may be a pixel in a region other than the region of the object.

Specifically, the target video frame may be segmented by using any one of the following three implementations.

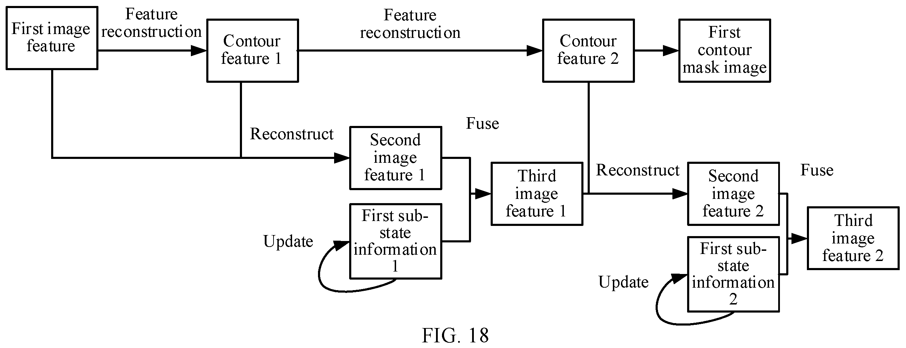

In a first implementation, the target video frame may be segmented based on the first image feature in a segmentation manner mentioned in the following embodiment shown in FIG. 18. Details are not described herein.

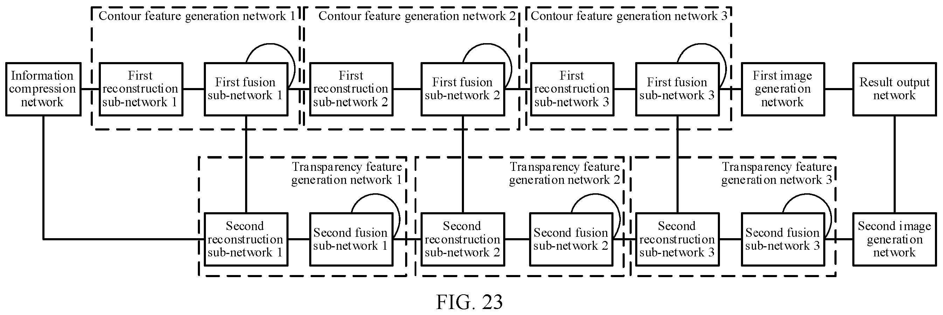

In a second implementation, based on the first image feature, the target video frame may be segmented by using a pre-trained network model, for example, a contour feature generation network and a first image generation network in a video segmentation model in the following embodiment shown in FIG. 23. Details are not described herein.

In a third implementation, the target video frame may be segmented based on the first image feature by using an image segmentation algorithm, a video segmentation algorithm, or the like.

Step S303: Perform feature reconstruction based on the first image feature and the obtained feature of the contour mask image, fuse a feature obtained by reconstruction with first hidden state information of the video, and update the first hidden state information, to obtain a fusion result.

The first hidden state information represents a fused feature of transparency mask images of object edges in video frames that undergo matting before the target video frame.

The object edges in the video frames may reflect details of image content of the object in the video frames. The image content details may include a specific position of the region of the object and transparency of object image content presented by a pixel in the region of the object.

The transparency mask images of the object edges in the video frames may be understood as mask images indicating the details of the image content of the object in the video frames. A pixel value of a pixel in the transparency mask images may indicate transparency of object image content presented by a pixel at a same position in the video frames.

For example, a pixel value range of the pixel in the transparency mask image may be from 0 to 1. If the pixel value of the pixel in the transparency mask image is 0, it indicates that the pixel at the same position in the video frame belongs to a region other than the region of the object, and image content presented by the pixel at the same position does not include image content of the object. If the pixel value of the pixel in the transparency mask image is 0.6, it indicates that the pixel at the same position in the video frame belongs to the region of the object, and the transparency of the object image content presented by the pixel at the same position is 0.6. If the pixel value of the pixel in the transparency mask image is 1, it indicates that the pixel at the same position in the video frame belongs to the region of the object, and image content presented by the pixel at the same position is all the image content of the object.

The video frame that undergoes matting before the target video frame mentioned in this step includes at least two video frames, and certainly, may be all video frames that undergo matting before the target video frame.

When the target video frame is the first video frame in the video, the target video frame does not have any video frame that undergoes matting before the target video frame. In this case, the foregoing first hidden state information may be preset data, for example, preset all-zero data.

Specifically, the foregoing first hidden state information may be represented in a tensor form, or may be represented in a matrix form.

As can be seen from the description of step S301, the first image feature is a feature whose scale is reduced relative to the target video frame, and the first image feature can reflect the region of the object in the target video frame. To subsequently successfully extract the region of the object from the target video frame, feature mapping needs to be performed on the small-scale first image feature, with an ultimate goal of mapping the first image feature to the target video frame, thereby obtaining the region of the object in the target video frame. In view of this, upsampling processing needs to be performed on the foregoing first image feature.

Specifically, feature reconstruction is performed based on the first image feature, to reconstruct a feature at an increased scale, and then a feature obtained by reconstruction is fused with the foregoing first hidden state information, to obtain the fusion result. The first hidden state information represents the fused feature of the transparency mask images of the object edges in the video frames that undergo matting before the target video frame. That is, the first hidden state information can represent information of the object edges in the video frames before the target video frame. The information of the object edges may include specific position information of the region of the object. In this way, after the feature obtained by reconstruction is fused with the first hidden state information, the obtained fusion result can reflect the region of the object in the target video frame, and the region of the object in the target video frame can also be adjusted with reference to a region of the object in a previous video frame, thereby ensuring smoothness or temporal correlation of a region of the object between adjacent video frames.

The first hidden state information further needs to be used during matting on subsequent video frames, and thus needs to be updated based on information of the object in the target video frame. Specifically, the foregoing hidden state information may be updated based on the foregoing first image feature, or the hidden state information may be updated based on the foregoing fusion result. For example, a result of fusion of the feature obtained by reconstruction with the foregoing first hidden state information may be used as new first hidden state information.

Specifically, when feature reconstruction is performed based on the first image feature, the first image feature may be transformed by using an upsampling algorithm, to obtain a reconstructed first image feature. Deconvolution transformation may be performed on the foregoing first image feature, to obtain a reconstructed first image feature. The first image feature may be reconstructed based on a decoding network, to obtain a reconstructed first image feature. For example, the foregoing decoding network may be a decoding part in a U-Net network architecture or a decoder part in a U²-Net network architecture.

The reconstructed first image feature and the foregoing first hidden state information may be fused by using either of the following two implementations.

In a first implementation, the reconstructed first image feature and the first hidden state information may be fused by using a fusion algorithm, a network, or the like, to obtain the fusion result.

For example, the reconstructed first image feature and the first hidden state information are fused by using a long short-term memory (Long Short-Term Memory, LSTM) network, a gated recurrent unit (Gated Recurrent Unit, GRU), or the like, to obtain the fusion result.

In a second implementation, the reconstructed first image feature and the first hidden state information may be directly processed by operations such as superposition, stitching, or dot multiplication, to obtain a processing result as the fusion result.

For other implementations of step S303, refer to subsequent embodiments. Details are not described herein.

Step S304: Obtain a target transparency mask image of an object edge in the target video frame based on the fusion result.

The target transparency mask image may be understood as a mask image indicating details of image content of the object in the target video frame. A pixel value range of a pixel in the target transparency mask image may be from 0 to 1, and a scale thereof is the same as that of the target video frame.

In an implementation of this application, the foregoing fusion result may include confidence levels at which the pixels in the target video frame belong to the object. In this case, after the foregoing fusion result is obtained, the target transparency mask image may be obtained according to confidence levels corresponding to pixels included in the fusion result.

For example, the confidence levels corresponding to the pixels in the fusion result may be used as pixel values of pixels at a same position in the mask image, to obtain the target transparency mask image.

In another example, a first threshold and a second threshold may be preset. The first threshold is greater than the second threshold. If a confidence level corresponding to a pixel included in the fusion result is greater than or equal to the first threshold, it indicates that the confidence level corresponding to the pixel is close to 1, leading to a high confidence level at which the pixel belongs to the object, in which case it may be determined that the pixel value of the pixel at the same position in the mask image is 1. If a confidence level corresponding to a pixel included in the fusion result is less than or equal to the second threshold, it indicates that the confidence level corresponding to the pixel is close to 0, leading to a low confidence level at which the pixel belongs to the object, in which case it may be determined that the pixel value of the pixel at the same position in the mask image is 0. If a confidence level corresponding to a pixel included in the fusion result is between the first threshold and the second threshold, the confidence level corresponding to the pixel is mapped to an interval of 0 to 1 according to a mapping relationship between a confidence level interval from the second threshold to the first threshold and the interval of 0 to 1, and a value obtained after mapping is the pixel value of the pixel at the same position in the mask image.

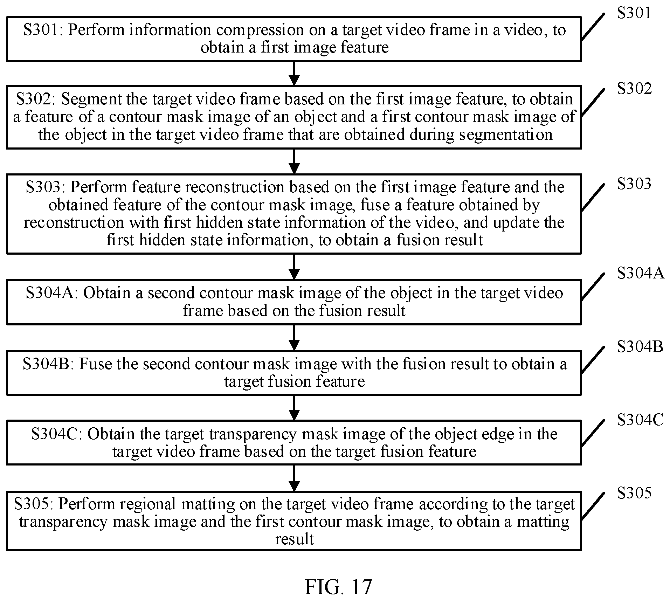

In another implementation of this application, the foregoing target transparency mask image may be obtained by using steps S304A to S304C in the following embodiment shown in FIG. 17.

Step S305: Perform regional matting on the target video frame according to the target transparency mask image and the first contour mask image, to obtain a matting result.

Specifically, the first contour mask image indicates a general region of the object in the target video frame, and the target transparency mask image indicates details of image content of the object in the target video frame. In this way, according to the target transparency mask image and the first contour mask image, regional matting may be performed on the target video frame with reference to the general region and the details of the image content of the object in the target video frame, to obtain the matting result.

In an implementation of this application, dot multiplication may be performed on the target transparency mask image and the first contour mask image according to positions of pixels, to obtain a mask image after dot multiplication, and then dot multiplication is performed again on the obtained mask image and the target video frame according to the positions of the pixels, to obtain a dot multiplication result as the matting result, thereby implementing regional matting on the target video frame.

In addition, refer to FIG. 16 which is a schematic diagram from a target video frame to a target transparency mask image and a first contour mask image and then to a matting result when a plurality of video frames are used as the target video frame. In FIG. 16, a first row of images is a plurality of target video frames; a second row of images is first contour mask images corresponding to the plurality of target video frames; a third row of images is target transparency mask images corresponding to the plurality of target video frames; and a fourth row of images is matting results corresponding to the plurality of target video frames.

As can be seen from the above, in the solution provided in this embodiment, when the target video frame is segmented based on the first image feature, a feature of a contour mask image of the object during the segmentation is obtained. The feature is representative of a contour of the object in the contour mask image. The first hidden state information represents a fused feature of transparency mask images of object edges in video frames that undergo matting before the target video frame. In this way, feature reconstruction is performed based on the first image feature and the obtained feature of the contour mask image, and a feature obtained by reconstruction is fused with the first hidden state information. In an obtained fusion result, contour information of the object in the contour mask image is fused, and information of the object edges in the video frames that undergo matting before the target video frame is also fused. Moreover, there is often temporal correlation between the video frames in the video. In this way, when a target transparency mask image is obtained based on the fusion result, information of the object in the video frames with temporal correlation is considered on the basis of the target video frame, thereby improving accuracy of the obtained target transparency mask image. On this basis, regional matting can be accurately performed on the target video frame according to the target transparency mask image and the first contour mask image.

In addition, when the target transparency mask image is obtained, the fused feature of the transparency mask images of the object edges in the video frames that undergo matting before the target video frame is considered, that is, image information of the object edges in the video frames is considered, rather than considering only the image information of the target video frame, which can improve inter-frame smoothness of object edge region changes in the target transparency mask image corresponding to each video frame in the video, thereby improving inter-frame smoothness of object edge region changes in the matting result corresponding to each video frame. In addition, when the video is a video of a moving object, since in this solution, information about a video frame that has undergone matting is considered when matting is performed on the target video frame, smoothness between a matting result of the target video frame and a matting result of the video frame that has undergone matting can be higher.

Other implementations of obtaining the target transparency mask image in step S304 are described below.

In an embodiment of this application, refer to FIG. 17 which provides a schematic flowchart of a second video matting method. In this embodiment, step S304 may be implemented by using the following steps S304A to S304C.

Step S304A: Obtain a second contour mask image of the object in the target video frame based on the fusion result.

The foregoing second contour mask image may be a binary image, and a scale thereof is the same as that of the target video frame.

In an implementation of this application, as can be seen from the description of step S304, the foregoing fusion result may include confidence levels at which the pixels in the target video frame belong to the object. In this case, after the foregoing fusion result is obtained, binarization processing may be performed on the fusion result based on a preset third threshold, to obtain the second contour mask image.

During the foregoing binarization processing, a value in the fusion result greater than the third threshold value may be set to 0, and a value no greater than the third threshold value may be set to 1. Certainly, alternatively, a value in the fusion result less than the third threshold value may be set to 0, and a value no less than the third threshold value may be set to 1. This is not limited in this embodiment of this application.

Step S304B: Fuse the second contour mask image with the fusion result to obtain a target fusion feature.

Specifically, the second contour mask image and the fusion result may be fused by using either of the following two implementations.

In a first implementation, the second contour mask image and the fusion result may be fused by using a fusion algorithm, a network, or the like, to obtain a fused target fusion feature.

In a second implementation, the second contour mask image and the fusion result may be directly processed by operations such as superposition, stitching, or dot multiplication, to obtain a processing result as the target fusion feature.

Step S304C: Obtain the target transparency mask image of the object edge in the target video frame based on the target fusion feature.

The target fusion feature is obtained by fusing the second contour mask image with the fusion result. The second contour mask image indicates a general region of the object in the target video frame. The fusion result may include confidence levels at which the pixels in the target video frame belong to the object. In this way, the target fusion feature obtained by fusing the two may include confidence levels at which pixels in the general region of the object in the target video frame belong to the object. Therefore, based on the target fusion feature, the target transparency mask image may be obtained by using the confidence levels corresponding to the pixels included in the feature.

Specifically, for an implementation of obtaining the target transparency mask image based on the target fusion feature, refer to the implementation of obtaining the target transparency mask image based on the fusion result in step S304. Details are not described herein again.

As can be seen from the above, in the solution provided in this embodiment, the second contour mask image of the object is obtained based on the fusion result, and the second contour mask image may indicate a general region of the object determined by a general contour of the object in the target video frame. In this way, the second contour mask image is fused with the fusion result to obtain the target fusion feature. Then, the target fusion feature only needs to focus on detailed information of an image in the general region of the object. Therefore, based on the target fusion feature, the target transparency mask image of the object edge can be accurately obtained by only focusing on image content in the general region of the object, so that accuracy of video matting can be improved by performing video matting based on the target transparency mask image.

A first implementation of segmenting the target video frame mentioned in step S302 is described below.

In an embodiment of this application, refer to FIG. 18 which provides a schematic flowchart of a first feature processing method. A feature processing process shown in FIG. 18 includes the segmentation process in step S302 and the reconstruction and fusion process in step S303. A quantity of times of feature reconstruction included in the segmentation process is the same as a quantity of times of transparency information fusion included in the reconstruction and fusion process.

In FIG. 18, the segmentation process includes two feature reconstruction operations, and the reconstruction and fusion process includes two transparency information fusion operations. In addition, the quantity of times of feature reconstruction included in the segmentation process and the quantity of times of transparency information fusion included in the reconstruction and fusion process may be other quantities such as 3, 4, and 5, which are not limited in this embodiment.

The segmentation process in step S302 and the reconstruction and fusion process in step S303 are separately described below with reference to FIG. 18.

Firstly, for the segmentation process in step S302, when the target video frame is segmented based on the first image feature, cascaded feature reconstruction may be performed based on the first image feature, to obtain features of contour mask images of the object that are at sequentially increased scales, and the first contour mask image of the object in the target video frame is obtained based on a feature obtained from final processing.

The cascaded feature reconstruction may be understood as a plurality of times of feature reconstruction. A result of each feature reconstruction operation is a feature of a contour mask image at one scale. In addition, an object of the first feature reconstruction operation is the foregoing first image feature, and an object of another feature reconstruction operation is a feature obtained from previous feature reconstruction.

In FIG. 18, the cascaded feature reconstruction process includes two feature reconstruction operations. In a first feature reconstruction process, an object on which feature reconstruction is performed is the first image feature. After feature reconstruction is performed on the first image feature, a contour feature 1 of a contour mask image at an increased scale may be obtained. In this case, the first feature reconstruction process ends.

In a second feature reconstruction process, the object on which feature reconstruction is performed is the foregoing contour feature 1. After feature reconstruction is performed on the contour feature 1, a contour feature 2 of a contour mask image at a further increased scale may be obtained. In this case, the second feature reconstruction process ends. The contour feature 2 is the feature obtained from final processing. In this way, the first contour mask image of the object in the target video frame can be obtained based on the contour feature 2.

An implementation of each feature reconstruction operation and an implementation of obtaining the first contour mask image based on the feature obtained from final processing are described below.

In each feature reconstruction process, feature reconstruction may be implemented by using either of the following two implementations.

In a first implementation, feature reconstruction may be implemented in feature reconstruction, feature fusion, and update manners mentioned in subsequent embodiments. Details are not described herein.

In a second implementation, an object of each feature reconstruction operation may be processed by using an upsampling algorithm, deconvolution transformation, a feature decoding network, or the like.

After the feature obtained from final feature reconstruction processing is obtained, the feature may include confidence levels at which the pixels in the target video frame belong to the object. In this case, after the feature is obtained, binarization processing may be performed on the feature based on a preset fourth threshold, to obtain the first contour mask image.

Secondly, for the reconstruction and fusion process in step S303, in this embodiment, the first hidden state information includes: a plurality of pieces of first sub-hidden state information, each piece of first sub-hidden state information representing a fused feature of transparency mask images at one scale. The plurality of pieces of first sub-hidden state information may represent a fused feature of transparency mask images at sequentially increased scales. For example, the foregoing first hidden state information may include three pieces of first sub-hidden state information. The three pieces of first sub-hidden state information may represent a fused feature of transparency mask images whose scales are sequentially 24*24, 28*28, and 32*32.

In this case, when feature reconstruction, fusion, and update are performed based on the first image feature and the obtained feature of the contour mask image, transparency information fusion may be performed a preset quantity of times in the following manner, and a feature obtained from final processing is determined as the fusion result:

performing feature reconstruction based on a first target feature and a second target feature that is in the obtained feature of the contour mask image, to obtain a second image feature at an increased scale, fusing the second image feature with first sub-state information in the first hidden state information, and updating the first sub-state information, to obtain a third image feature.

The foregoing preset quantity is a quantity set in advance, and is the same as a quantity of reconstruction times of cascaded feature reconstruction.

In a first information fusion operation, the first target feature is the first image feature, and in other information fusion operations, the first target feature is a feature obtained from a previous information fusion operation.

A scale of the first target feature is the same as that of the second target feature.

The scale of the transparency mask images corresponding to the fused feature represented by the first sub-state information is the same as a scale of the second image feature.

In FIG. 18, the foregoing preset quantity is 2. That is, the transparency information fusion process is performed twice. In a first transparency information fusion process, the first target feature is the first image feature, the second target feature is the foregoing contour feature 1, scales of the first image feature and the contour feature 1 are the same, and feature reconstruction is performed based on the first target feature and the second target feature. That is, feature reconstruction is performed based on the first image feature and the contour feature 1, to obtain a second image feature 1 at an increased scale, the second image feature 1 is fused with first sub-state information 1 corresponding to the second image feature 1, and the first sub-state information 1 is updated, to obtain a third image feature 1. In this case, the first transparency information fusion process ends.

After the third image feature 1 in the first transparency information fusion process is obtained, transparency information fusion is performed for the second time. In a second transparency information fusion process, the first target feature is the foregoing third image feature 1, the second target feature is the foregoing contour feature 2, scales of the third image feature 1 and the contour feature 2 are the same, and feature reconstruction is performed based on the first target feature and the second target feature. That is, feature reconstruction is performed based on the third image feature 1 and the contour feature 2, to obtain a second image feature 2 at a further increased scale, the second image feature 2 is fused with first sub-state information 2 corresponding to the second image feature 2, and the first sub-state information 2 is updated, to obtain a third image feature 2. In this case, the second transparency information fusion process ends. The third image feature 2 is a fusion result finally obtained.

For an implementation of performing feature reconstruction based on the first target feature and the second target feature, refer to the implementation of performing feature reconstruction based on the first image feature and the feature of the contour mask image in step S303 in the embodiment shown in FIG. 15. For an implementation of each operation of fusing the second image feature with the first sub-state information and updating the first sub-state information, refer to the implementation of fusing the feature obtained by reconstruction with the first hidden state information and updating the first hidden state information in step S303 in the embodiment shown in FIG. 15. Details are not described herein again.

As can be seen from the above, in the solution provided in this embodiment, based on the first image feature, the target video frame is segmented by cascaded feature reconstruction. Cascaded feature reconstruction includes a plurality of feature reconstruction processes. In this way, accuracy of the first contour mask image can be improved. Transparency information fusion is performed a plurality of times after the first image feature is obtained. Each transparency information fusion process includes three processing processes: feature reconstruction, fusion of a feature with hidden state information, and update of hidden state information. In this way, accuracy of the final fusion result obtained can be improved, so that regional matting is performed on the target video frame based on the first contour mask image and the fusion result that are relatively accurate, thereby improving accuracy of regional matting and further improving the accuracy of video matting.

In each transparency information fusion process, the two features required for feature reconstruction typically have a larger amount of data, resulting in a larger amount of computation for feature reconstruction and a larger amount of computation for a preset quantity of times of transparency information fusion.

In view of this, in an embodiment of this application, when feature reconstruction is performed based on the first target feature and the second target feature that is in the obtained feature of the contour mask image, a representative feature of the object edge may be selected from the second target feature in the obtained feature of the contour mask image, and feature reconstruction is performed based on the first target feature and the representative feature, to obtain the second image feature at the increased scale.

The foregoing representative feature is a feature included in the foregoing second target feature and representative of edge details of the object in the target video frame.

During feature reconstruction based on the first image feature, attributes of the object represented by features of contour mask images obtained by reconstruction can be determined. In this way, in each transparency information fusion process, after the second target feature at the same scale as the first target feature is determined from the features of the contour mask images, the feature that is in the second target feature and is representative of the object edge may be determined according to an attribute of the object represented by the second target feature, thereby extracting the determined feature from the second target feature. The extracted feature is the representative feature.

Specifically, after the feature that is in the second target feature and is representative of the object edge is determined, the representative feature may be extracted from the second target feature by using a feature selection algorithm, a feature selection network, an attention mechanism, or the like.

After the representative feature is selected, for an implementation of performing feature reconstruction based on the first target feature and the representative feature, refer to the implementation of performing feature reconstruction based on the first target feature and the second target feature in the foregoing embodiment. Details are not described herein again.

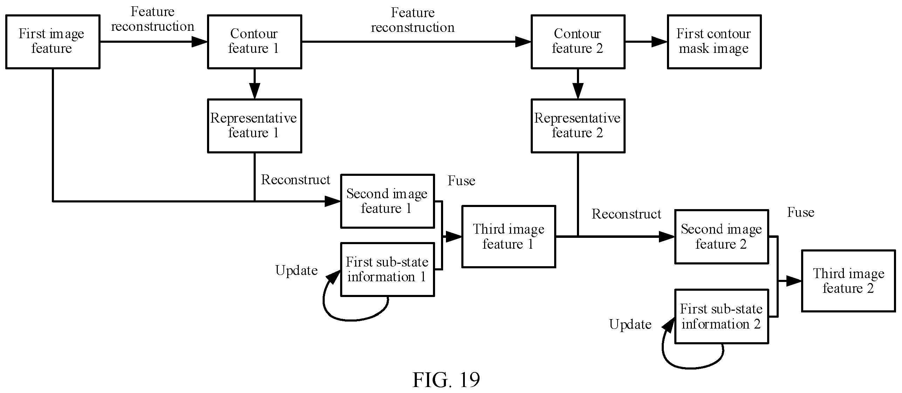

Referring to FIG. 19, FIG. 19 is adjusted based on FIG. 18. Specific adjustment content is as follows: in the first transparency information fusion process, when feature reconstruction is performed based on the first image feature and the contour feature 1, a representative feature 1 is first selected from the contour feature 1, and then feature reconstruction is performed based on the first image feature and the representative feature 1, to obtain a second image feature 1 at an increased scale. In the second transparency information fusion process, when feature reconstruction is performed based on the third image feature 1 and the contour feature 2, a representative feature 2 is first selected from the contour feature 2, and then feature reconstruction is performed based on the third image feature 1 and the representative feature 2, to obtain a second image feature 2 at a further increased scale.

As can be seen from the above, in the solution provided in this embodiment, in the process of performing feature reconstruction based on the first target feature and the second target feature, a representative feature with a smaller amount of data is selected from the second target feature, so that feature reconstruction is performed based on the first target feature and the representative feature, and an amount of computation for feature reconstruction can be reduced, which can thus reduce an amount of computation for a preset quantity of times of transparency information fusion, thereby improving efficiency of obtaining the fusion result and improving efficiency of video matting.

The manner of implementing feature reconstruction in feature reconstruction, feature fusion, and update manners mentioned in the embodiment shown in FIG. 18 is described below.

In an embodiment of this application, after the foregoing first image feature is obtained, contour information fusion may be performed a preset quantity of times in the following manner, to obtain features of contour mask images of the object that are at sequentially increased scales. One contour information fusion processing operation is equivalent to one feature reconstruction processing operation:

performing feature reconstruction based on a third target feature, to obtain a fourth image feature at an increased scale, fusing the fourth image feature with second sub-state information in the second hidden state information, and updating the second sub-state information, to obtain the feature of the contour mask image of the object.

In a first information fusion operation, the third target feature is the first image feature, and in other information fusion operations, the third target feature is a feature obtained from a previous feature reconstruction operation.

The second hidden state information represents a fused feature of contour mask images of the object in video frames segmented before the target video frame.

The second hidden state information includes a plurality of pieces of second sub-hidden state information. Each piece of second sub-hidden state information represents a fused feature of contour mask images at one scale. The plurality of pieces of second sub-hidden state information may represent a fused feature of contour mask images at sequentially increased scales. For example, the foregoing second hidden state information may include three pieces of second sub-hidden state information. The three pieces of second sub-hidden state information may represent a fused feature of contour mask images whose scales are sequentially 24*24, 28*28, and 32*32.

The scale of the contour mask images corresponding to the fused feature represented by the second sub-state information is the same as a scale of the fourth image feature. For example, if the foregoing second hidden state information includes three pieces of second sub-hidden state information and the three pieces of second sub-hidden state information represent a fused feature of contour mask images whose scales are sequentially 24*24, 28*28, and 32*32, it indicates that the foregoing preset quantity is three and fusion needs to be performed three times. Scales of fourth image features obtained in three fusion processes are sequentially 24*24, 28*28, and 32*32.

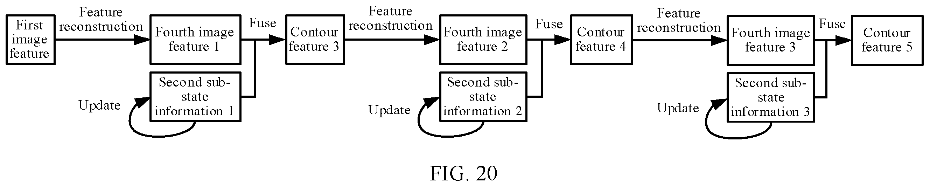

The foregoing contour information fusion process is described below with reference to FIG. 20 based on an example in which the foregoing preset quantity is 3.

Refer to FIG. 20 which provides a schematic flowchart of a cascaded feature reconstruction method. In FIG. 20, after the foregoing first image feature is obtained, contour information fusion is performed for the first time. In a first contour information fusion process, the third target feature is the first image feature, and feature reconstruction is performed based on the third target feature. That is, feature reconstruction is performed based on the first image feature, to obtain a fourth image feature 1 at an increased scale, the fourth image feature 1 is fused with second sub-state information 1 corresponding to the fourth image feature 1, and the second sub-state information 1 is updated, to obtain a contour feature 3 of the contour mask image of the object. In this case, the first contour information fusion process ends.

After the contour feature 3 is obtained, contour information fusion is performed for the second time. In a second contour information fusion process, the third target feature is the contour feature 3, and feature reconstruction is performed based on the third target feature. That is, feature reconstruction is performed based on the contour feature 3, to obtain a fourth image feature 2 at a further increased scale, the fourth image feature 2 is fused with second sub-state information 2 corresponding to the fourth image feature 2, and the second sub-state information 2 is updated, to obtain a contour feature 4 of the contour mask image of the object. In this case, the second contour information fusion process ends.

After the contour feature 4 is obtained, contour information fusion is performed for the third time. In a third contour information fusion process, the third target feature is the contour feature 4, and feature reconstruction is performed based on the third target feature. That is, feature reconstruction is performed based on the contour feature 4, to obtain a fourth image feature 3 at a further increased scale, the fourth image feature 3 is fused with second sub-state information 3 corresponding to the fourth image feature 3, and the second sub-state information 3 is updated, to obtain a contour feature 5 of the contour mask image of the object. In this case, the second contour information fusion process ends. The contour feature 5 obtained is a finally obtained feature of the contour mask image of the object.

For an implementation of performing feature reconstruction based on the third target feature in each contour information fusion process, refer to the implementation of performing feature reconstruction based on the first image feature in step S303 in the embodiment shown in FIG. 15. For an implementation of performing fusion based on the fourth image feature and the second sub-state information and updating the second sub-state information, refer to the implementation of performing fusion based on the reconstructed first image feature and the first hidden state information and updating the first hidden state information in step S303 in the embodiment shown in FIG. 15. Details are not described herein again.

As can be seen from the above, in the solution provided in this embodiment, the second hidden state information represents a fused feature of contour mask images of the object in video frames segmented before the target video frame, and each piece of second sub-hidden state information represents a fused feature of contour mask images at one scale. Therefore, fusing the fourth image feature obtained by feature reconstruction with the second sub-state information in each contour information fusion process is fusing information in the fused feature of the contour mask images, which are at one scale, of the object in the video frames segmented before the target video frame with the fourth image feature. In this way, the finally obtained feature of the contour mask image of the object includes information of the object in the target video frame, and also includes information of the object in the video frames segmented before the target video frame, so that the first contour mask image is obtained based on the finally obtained feature, which can improve accuracy of the first contour mask image, thereby improving accuracy of video matting.

When feature reconstruction is performed in the contour information fusion process, in addition to performing feature reconstruction based on the third target feature, feature reconstruction may also be performed with reference to the third target feature and other information.

In an embodiment of this application, the foregoing first image feature includes a plurality of first sub-image features. When information compression is performed on the target video frame in the video, cascaded information compression may be performed on the target video frame, to obtain first sub-image features at sequentially decreased scales.

The cascaded information compression may be understood as information compression performed multiple times, and a result of each information compression operation is a first sub-image feature. Moreover, an object of a first information compression operation is the target video frame, and an object of another information compression operation is the first sub-image feature obtained from a previous information compression operation.

For an implementation of each information compression operation, refer to an implementation of performing information compression on the target video frame in step S301 shown in FIG. 15.

For example, in each information compression operation, convolution transformation may be performed multiple times on the object of information compression.

In another example, in each information compression operation, information compression may be implemented by performing a subsequent processing procedure, which is shown in steps S301A to S301E in the embodiment shown in FIG. 22, one or more times.

After the first sub-image features at sequentially decreased scales are obtained, a preset quantity of times of contour information fusion may be performed based on the first sub-image features.

When feature reconstruction is performed in the first contour information fusion process, the first sub-image feature at the smallest scale in the first sub-image features may be used as a target feature, and feature reconstruction is performed based on the target feature.

When feature reconstruction is performed in another contour information fusion process, a feature obtained from a previous contour information fusion operation may be used as the third target feature, and feature reconstruction is performed based on the third target feature and the first sub-image feature whose scale is the same as that of the third target feature, to obtain a fourth image feature at an increased scale.

When feature reconstruction is performed based on the third target feature and the first sub-image feature whose scale is the same as that of the third target feature, the third target feature and the first sub-image feature whose scale is the same as that of the third target feature may be fused into one feature in a fusion manner such as superposition or dot multiplication, and then feature reconstruction is performed based on the feature obtained by fusion.

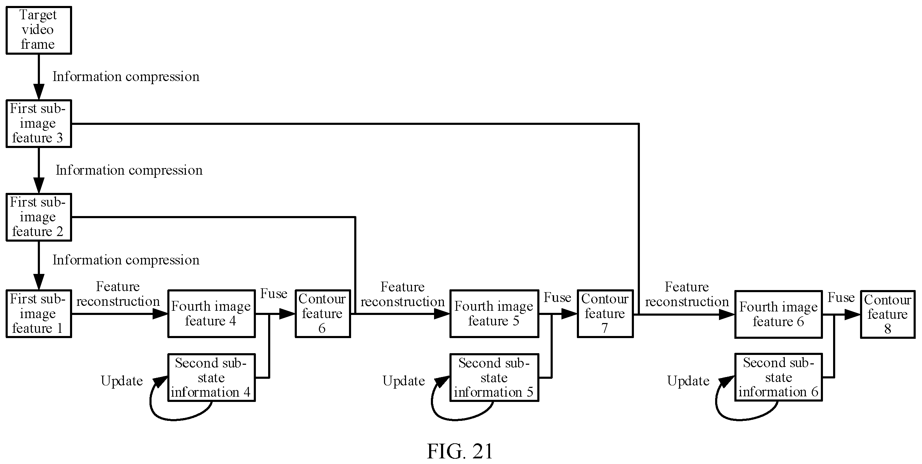

The foregoing contour information fusion process is described below with reference to FIG. 21 based on an example in which the foregoing preset quantity is 3.

Refer to FIG. 21 which provides a schematic flowchart of another cascaded feature reconstruction method. In FIG. 21, after the first sub-image features at sequentially decreased scales are obtained, contour information fusion is performed for the first time. In a first contour information fusion process, the third target feature is a first sub-image feature 1 at the smallest scale in the first sub-image features, and feature reconstruction is performed based on the third target feature. That is, feature reconstruction is performed based on the first sub-image feature 1, to obtain a fourth image feature 4 at an increased scale, the fourth image feature 4 is fused with second sub-state information 4 corresponding to the fourth image feature 4, and the second sub-state information 4 is updated, to obtain a contour feature 6 of the contour mask image of the object. In this case, the first contour information fusion process ends.

After the contour feature 6 in the first contour information fusion process is obtained, contour information fusion is performed for the second time. In a second contour information fusion process, the third target feature is the foregoing contour feature 6, the first sub-image feature whose scale is the same as that of the third target feature is a first sub-image feature 2, and feature reconstruction is performed based on the third target feature and the first sub-image feature whose scale is the same as that of the third target feature. That is, feature reconstruction is performed based on the contour feature 6 and the first sub-image feature 2, to obtain a fourth image feature 5 at a further increased scale, the fourth image feature 5 is fused with second sub-state information 5 corresponding to the fourth image feature 5, and the second sub-state information 5 is updated, to obtain a contour feature 7 of the contour mask image of the object. In this case, the second contour information fusion process ends.

After the contour feature 7 in the second contour information fusion process is obtained, contour information fusion is performed for the third time. In a third contour information fusion process, the third target feature is the foregoing contour feature 7, the first sub-image feature whose scale is the same as that of the third target feature is a first sub-image feature 3, and feature reconstruction is performed based on the third target feature and the first sub-image feature whose scale is the same as that of the third target feature. That is, feature reconstruction is performed based on the contour feature 7 and the first sub-image feature 3, to obtain a fourth image feature 6 at a further increased scale, the fourth image feature 6 is fused with second sub-state information 6 corresponding to the fourth image feature 6, and the second sub-state information 6 is updated, to obtain a contour feature 8 of the contour mask image of the object. In this case, the second contour information fusion process ends. The contour feature 8 obtained in this process is a finally obtained feature of the contour mask image of the object.

As can be seen from the above, in the solution provided in this embodiment, cascaded information compression is performed on the target video frame, to obtain first sub-image features at sequentially decreased scales, and in subsequent contour information fusion processes except the first one, feature reconstruction may be performed based on the third target feature and the first sub-image feature whose scale is the same as that of the third target feature, which can improve accuracy of feature reconstruction, thereby improving accuracy of a feature finally obtained after contour information fusion and improving the accuracy of video matting.

As can be seen from the foregoing content, the transparency information fusion and the contour information fusion are both performed a preset quantity of times. A larger preset quantity indicates a more accurate fusion result obtained by transparency information fusion and a more accurate feature obtained by contour information fusion. However, this leads to a larger amount of computation.

In view of this, in an embodiment of this application, the foregoing preset quantity is 4, 5, or 6. In this way, accuracy of video matting can be improved, and an excessively large amount of computation can also be prevented, to ensure high efficiency in video matting and also save computing resources of the terminal. Therefore, the solution provided in this embodiment of this application can be applied to a terminal, and is friendly to application of the solution to the terminal, so that lightweight application of the video matting solution to the terminal can be implemented.

The second image feature and the fourth image feature have a larger amount of data, fusing the second image feature with the first sub-state information in the first hidden state information and updating the first sub-state information generally involve a larger amount of computation, and fusing the fourth image feature with the second sub-state information in the second hidden state information and updating the second sub-state information generally also involve a larger amount of computation.

In view of the above situation, to reduce the amount of computation for fusing the second image feature with the first sub-state information and updating the first sub-state information, in an embodiment of this application, when the second image feature is fused with first sub-state information and the first sub-state information is updated, the second image feature is segmented, to obtain a second sub-image feature and a third sub-image feature; the second sub-image feature is fused with the first sub-state information in the first hidden state information, and the first sub-state information is updated, to obtain a fourth sub-image feature; and the fourth sub-image feature and the third sub-image feature are stitched, to obtain the third image feature.

A feature may be represented in the form of a matrix or a tensor. Taking tensors as an example, segmenting the second image feature may be understood as segmenting a feature tensor representing the second image feature into two sub-tensors in any dimensional direction of the feature tensor.

For example, for a feature tensor whose scale is H*C*W, the feature tensor may be segmented in a W-dimension direction, to obtain two sub-feature tensors whose scales are respectively H*C*W1 and H*C*W2, where W1+W2=W.

Specifically, when the second image feature is segmented, the second image feature may be segmented in equal proportions to obtain two sub-features at a same scale, or the second image feature may be segmented in any proportion, to obtain two sub-features at different scales. Moreover, after the second image feature is segmented to obtain two sub-features, it may be determined that either of the sub-features is the second sub-image feature, and the other sub-feature is determined as the third sub-image feature.

After the second sub-image feature and the third sub-image feature are obtained by segmentation, the second sub-image feature and the first sub-state information in the first hidden state information may be fused and the first sub-state information is updated, to obtain a fourth sub-image feature. For a specific implementation, refer to the implementation of fusing the feature obtained by reconstruction with the first hidden state information and updating the first hidden state information in step S303 in the embodiment shown in FIG. 15. Details are not described herein again.

Feature stitching may be considered as reverse processing of feature segmentation. After the fourth sub-image feature is obtained by fusion, the fourth sub-image feature and the third sub-image feature may be stitched. When the two features are stitched, the fourth sub-image feature and the third sub-image feature may be stitched into a feature according to a dimensional direction during segmentation. That is, the third sub-image feature is stitched to the fourth sub-image feature, or the fourth sub-image feature is stitched to the third sub-image feature in the dimensional direction during segmentation. In this way, a feature obtained by stitching is the third image feature.

For example, if a scale of the third sub-image feature is H*C*W3 and a scale of the fourth sub-image feature is H*C*W4, when the fourth sub-image feature and the third sub-image feature are stitched, the fourth sub-image feature and the third sub-image feature may be stitched into a feature at a scale of H*C*W5 in the W-dimension direction, where W3+W4=W5.

As can be from the above, in the solution provided in this embodiment, the second image feature is segmented, to obtain the second sub-image feature and the third sub-image feature, and amounts of data of the second sub-image feature and the third sub-image feature are both less than an amount of data of the second image feature. In this way, the second sub-image feature is fused with the first sub-state information, which can reduce an amount of computation for fusion, improve fusion efficiency, improve efficiency of obtaining the third image feature, further improve efficiency of video matting, and also save computing resources of the terminal, thereby implementing lightweight application of the video matting solution to the terminal.

To reduce the amount of computation for fusing the fourth image feature with the second sub-state information and updating the second sub-state information, in an embodiment of this application, when the fourth image feature is fused with second sub-state information and the second sub-state information is updated, the fourth image feature is segmented, to obtain a fifth sub-image feature and a sixth sub-image feature; the fifth sub-image feature is fused with the second sub-state information in the second hidden state information, and the second sub-state information is updated, to obtain a seventh sub-image feature; and the seventh sub-image feature and the sixth sub-image feature are stitched, to obtain the feature of the contour mask image of the object.

For an implementation of segmenting the fourth image feature, refer to the foregoing implementation of segmenting the second image. For an implementation of fusing the fifth sub-image feature with the second sub-state information and updating the second sub-state information, refer to the foregoing implementation of fusing the second sub-image feature with the first sub-state information and updating the first sub-state information. For an implementation of stitching the seventh sub-image feature and the sixth sub-image feature, refer to the foregoing implementation of stitching the fourth sub-image feature and the third sub-image feature. Details are not described herein again.

As can be from the above, in the solution provided in this embodiment, the fourth image feature is segmented, to obtain the fifth sub-image feature and the sixth sub-image feature, and amounts of data of the fifth sub-image feature and the sixth sub-image feature are both less than an amount of data of the fourth image feature. In this way, the fifth sub-image feature is fused with the first sub-state information, which can reduce an amount of computation for fusion, improve fusion efficiency, improve efficiency of obtaining the feature of the contour mask image of the object, further improve efficiency of video matting, and also save computing resources of the terminal, thereby implementing lightweight application of the video matting solution to the terminal.

In addition, to resolve the problem of the large amount of computation in the above two fusion processes, in an embodiment of this application, when the second image feature is fused with first sub-state information and the first sub-state information is updated, the second image feature is segmented, to obtain a second sub-image feature and a third sub-image feature; the second sub-image feature is fused with the first sub-state information in the first hidden state information, and the first sub-state information is updated, to obtain a fourth sub-image feature; and the fourth sub-image feature and the third sub-image feature are stitched, to obtain the third image feature. Moreover, when the fourth image feature is fused with second sub-state information and the second sub-state information is updated, the fourth image feature is segmented, to obtain a fifth sub-image feature and a sixth sub-image feature; and the fifth sub-image feature is fused with the second sub-state information in the second hidden state information, and the second sub-state information is updated, to obtain a seventh sub-image feature; and the seventh sub-image feature and the sixth sub-image feature are stitched, to obtain the feature of the contour mask image of the object. This can reduce amounts of computation in the two fusion processes, thereby further improving the fusion efficiency, which can further improve the efficiency of video matting and implement lightweight application of the video matting solution to the terminal.

An implementation of performing information compression on the target video frame with reference to processing such as convolution transformation, linear transformation, batch normalization processing, and nonlinear transformation in step S301 is described below.

In an embodiment of this application, refer to FIG. 22 which provides a schematic flowchart of a third video matting method. In this embodiment, step S301 may be implemented by using the following steps S301A to S301E.

Step S301A: Perform convolution transformation on the target video frame in the video, to obtain a fifth image feature.

Specifically, convolution computation may be performed on the target video frame by using a preset convolution kernel, to obtain the fifth image feature, or convolution transformation may be performed on the target video frame by using a trained convolutional neural network, to obtain the fifth image feature outputted by a model.

Step S301B: Perform linear transformation on the fifth image feature based on a convolution kernel, to obtain a sixth image feature.

The foregoing convolution kernel is a preset convolution kernel.

Specifically, based on the convolution kernel, linear transformation may be performed on the fifth image feature in a manner of performing convolution transformation on the fifth image feature. Since a network processing unit (Network Processing Unit, NPU) in the terminal has strong computing power for convolution transformation, performing linear transformation by convolution transformation can shorten the time of linear transformation, thereby shortening the time of video matting and improving efficiency of video matting.

In an embodiment of this application, the foregoing convolution kernel is a 1x1 convolution kernel. Since the 1x1 convolution kernel has a small amount of data, linear transformation on the fifth image feature based on the 1x1 convolution kernel can implement linear transformation on the fifth image feature, and can also reduce an amount of computation for linear transformation and improve computational efficiency of linear transformation, thereby improving efficiency of video matting. In addition, the video matting solution provided in this embodiment is applied to a terminal. Linear transformation is performed on the fifth image feature based on a 1x1 convolution kernel in the terminal, without occupying lots of computing resources of the terminal, thereby facilitating the terminal to implement linear transformation and facilitating lightweight implementation of video matting on a terminal side.

Step S301C: Perform batch normalization on the sixth image feature, to obtain a seventh image feature.

Specifically, batch normalization processing may be performed on the sixth image feature by using a batch normalization algorithm, a model, or the like, to obtain the seventh image feature.

For example, batch normalization processing may be performed on the sixth image feature by using a BatchNorm2d algorithm.

Step S301D: Perform nonlinear transformation on the seventh image feature, to obtain an eighth image feature.

Specifically, nonlinear transformation may be performed on the seventh image feature by using a nonlinear transformation function, an algorithm, an activation function, or the like, to obtain the eighth image feature.

For example, nonlinear transformation may be performed on the seventh image feature by using a GELU activation function or a RELU activation function. When nonlinear transformation is performed on the seventh image feature by using the RELU activation function, since the RELU activation function has a better quantization effect on data processing, performing the nonlinear transformation on the seventh image feature by using the RELU activation function can improve a transformation effect of nonlinear transformation, thereby improving accuracy of the eighth image feature.

Step S301E: Perform linear transformation on the eighth image feature based on the convolution kernel, to obtain the first feature of the target video frame.

An implementation of performing linear transformation in this step is the same as the implementation of performing linear transformation in step S301B. Details are not described herein again.

In addition, when the foregoing first feature is obtained, the processing procedure shown in steps S301A to S301E may be performed once, or the processing procedure shown in steps S301A to S301E may be performed multiple times. For example, the processing procedure shown in steps S301A to S301E may be performed 4 times, 5 times, or another quantity of times.

When the processing procedure shown in steps S301A to S301E is performed multiple times, an input in the first processing procedure is the target video frame in the video, an input in another processing procedure is a feature outputted from a previous processing procedure, and a feature outputted from the final processing procedure is the foregoing first feature. Moreover, in this case, as the foregoing processing procedure is performed multiple times, a scale of the feature outputted from each processing procedure constantly decreases.

As can be seen from the above, in the solution provided in this embodiment, when information compression is performed on the target video frame, multiple types of processing such as convolution transformation, linear transformation, batch normalization processing, and nonlinear transformation are performed on the target video frame, so that relatively accurate information compression can be performed on the target video, thereby improving accuracy of the first image feature, and further, the video segmentation is performed based on the first image feature, thereby improving accuracy of video matting.

In addition, in the solution provided in this embodiment of this application, batch normalization processing is first performed on the sixth image feature, and then nonlinear transformation is performed on the seventh image feature, which can prevent loss of feature quantization accuracy during information compression, thereby improving quantization accuracy of information compression and further improving the accuracy of the first image feature and the accuracy of video matting.

The solution provided in this embodiment of this application is applied to a terminal. Processing such as convolution transformation, linear transformation, batch normalization processing, and nonlinear transformation is relatively friendly to computing power of the terminal. Therefore, performing processing such as convolution transformation, linear transformation, batch normalization processing, and nonlinear transformation in the terminal can facilitate the terminal to perform information compression, thereby facilitating lightweight implementation of video matting on a terminal side.

The video matting solution provided in this embodiment of this application may alternatively be implemented based on a neural network model. The video matting solution is described below with reference to the neural network model.

In an embodiment of this application, the foregoing steps may be implemented by using a pre-trained video matting model.

Refer to FIG. 23 which provides a schematic structural diagram of a first video matting model. As can be seen from FIG. 23, the video matting model includes an information compression network, a first image generation network, a second image generation network, a result output network, three groups of contour feature generation networks, and three groups of transparency feature generation networks. Each group of contour feature generation networks corresponds to a scale of contour mask images and includes a first reconstruction sub-network and a first fusion sub-network, and each group of transparency feature generation networks corresponds to a scale of transparency mask images and includes a second reconstruction sub-network and a second fusion sub-network.

FIG. 23 shows the video matting model by using an example in which a quantity of the included contour feature generation networks is three. In addition, the quantity of the contour feature generation networks included in the video matting model may also be four, five, or another quantity, and the quantity of the transparency feature generation networks is the same as that of the contour feature generation networks, which are not limited in this embodiment.

A connection relationship between networks in the video matting model shown in FIG. 23 is described below.

The three groups of contour feature generation networks in the video matting model are respectively a contour feature generation network 1, a contour feature generation network 2, and a contour feature generation network 3 corresponding to contour mask images at sequentially increased scales, and the first reconstruction sub-network and the first fusion sub-network included in each group of contour feature generation networks are connected. The three groups of transparency feature generation networks are respectively a transparency feature generation network 1, a transparency feature generation network 2, and a transparency feature generation network 3 corresponding to transparency mask images at sequentially increased scales, and the second reconstruction sub-network and the second fusion sub-network included in each group of transparency feature generation networks are connected.

The video matting model has two branches: a segmentation branch and a matting branch. The segmentation branch mainly includes the three groups of contour feature generation networks and the first image generation network, and the matting branch mainly includes the three groups of transparency feature generation networks and the second image generation network. A first-layer network of the video matting model is the information compression network, the information compression network is respectively connected to the two branches, and a connection relationship further exists between the two branches.

Connection relationships between the networks included in the segmentation branch and the matting branch and the connection relationship between the two branches are respectively described below.

Firstly, the connection relationship between the networks included in the segmentation branch is described. The information compression network is connected to a first reconstruction sub-network 1 included in the contour feature generation network 1, a first fusion sub-network 1 included in the contour feature generation network 1 is connected to a first reconstruction sub-network 2 included in the contour feature generation network 2, a first fusion sub-network 2 included in the contour feature generation network 2 is connected to a first reconstruction sub-network 3 included in the contour feature generation network 3, and a first fusion sub-network 3 included in the contour feature generation network 3 is connected to the first image generation network.

Secondly, the connection relationship between the networks included in the matting branch is described. The information compression network is connected to a second reconstruction sub-network 1 included in the transparency feature generation network 1, a second fusion sub-network 1 included in the transparency feature generation network 1 is connected to a second reconstruction sub-network 2 included in the transparency feature generation network 2, a second fusion sub-network 2 included in the transparency feature generation network 2 is connected to a second reconstruction sub-network 3 included in the transparency feature generation network 3, and a second fusion sub-network 3 included in the transparency feature generation network 3 is connected to the second image generation network.

Finally, the connection relationship between the segmentation branch and the matting branch is described. The first fusion sub-network 1 included in the contour feature generation network 1 is connected to the second reconstruction sub-network 1 included in the transparency feature generation network 1; the first fusion sub-network 2 included in the contour feature generation network 2 is connected to the second reconstruction sub-network 2 included in the transparency feature generation network 2; and the first fusion sub-network 3 included in the contour feature generation network 3 is connected to the second reconstruction sub-network 3 included in the transparency feature generation network 3. In addition, the first image generation network and the second image generation network are connected to the result output network separately.

The networks and the sub-networks in the video matting model are described below respectively.

For the information compression network, when information compression is performed on the target video frame, the target video frame is inputted into the information compression network, and the information compression network performs information compression on the target video frame, to obtain a first feature outputted by the information compression network.

For an implementation in which the information compression network performs information compression on the target video frame, refer to the foregoing content. Details are not described herein again.

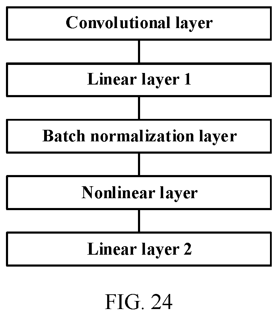

Referring to FIG. 24, FIG. 24 is a schematic structural diagram of an information compression network. In the information compression network shown in FIG. 24, network layers from top to bottom are sequentially: a convolutional layer, a linear layer 1, a batch normalization layer, a nonlinear layer, and a linear layer 2.

The convolutional layer is configured to perform convolution transformation on a target video frame, to obtain a fifth image feature.

The linear layer 1 is configured to perform linear transformation on the fifth image feature based on a convolution kernel, to obtain a sixth image feature.

The batch normalization layer is configured to perform batch normalization on the sixth image feature, to obtain a seventh image feature.

The nonlinear layer is configured to perform nonlinear transformation on the seventh image feature, to obtain an eighth image feature.

The linear layer 2 is configured to perform linear transformation on the eighth image feature based on the convolution kernel, to obtain a first feature.

For implementations in which the convolutional layer, the linear layer 1, the batch normalization layer, the nonlinear layer, and the linear layer 2 perform data processing, refer to the foregoing content. Details are not described herein again.

For the target first reconstruction sub-network in the target contour feature generation network, when feature reconstruction is performed based on the third target feature, the third target feature is inputted into the target first reconstruction sub-network, and the target first reconstruction sub-network performs feature reconstruction based on the third target feature, to obtain the fourth image feature that is outputted by the target first reconstruction sub-network and is at an increased scale. A scale of a contour mask image corresponding to the target contour feature generation network is the same as the scale of the fourth image feature.

For an implementation in which the target first reconstruction sub-network performs feature reconstruction based on the third target feature, refer to the foregoing embodiment. Details are not described herein again.

In an embodiment of this application, the foregoing first reconstruction sub-network is implemented based on a QARepVGG network structure.

Due to high quantization computation accuracy of a QARepVGG network, implementing the foregoing first reconstruction sub-network based on the QARepVGG network structure can enhance a quantization computation capability of the first reconstruction sub-network, thereby improving accuracy of feature reconstruction performed by the first reconstruction sub-network and improving accuracy of video matting.

In another embodiment of this application, a first reconstruction sub-network in a particular contour feature generation network is implemented based on the QARepVGG network structure.

The particular contour feature generation network is: a contour feature generation network corresponding to a contour mask image whose scale is less than a first preset scale.

The foregoing first preset scale may be a scale set in advance.

When the foregoing video matting model is constructed, a scale of a contour mask image corresponding to each group of contour feature generation networks may be determined. In this way, it can be determined that the contour feature generation network corresponding to the contour mask image whose scale is less than the first preset scale is a particular contour feature generation network, so as to construct the particular contour feature generation network based on the QARepVGG network structure when the particular contour feature generation network is constructed. Another contour feature generation network may be constructed based on another network structure.

An amount of computation for generating a U-shaped residual block in the particular contour feature generation network based on the QARepVGG network structure increases as the scale of the contour mask image corresponding to the network increases. Therefore, when each contour feature generation network is constructed, only for a particular contour feature generation network corresponding to a contour mask image whose scale is less than the first preset scale, the first reconstruction sub-network in the particular contour feature generation network may be implemented based on the QARepVGG network structure. In this way, an amount of computation for each contour feature generation network can be reduced, efficiency of obtaining the feature of the contour mask image of the object can be improved, thereby improving efficiency of video matting, and the foregoing video matting model can also be deployed in a lightweight manner in the terminal.

For a target first fusion sub-network in the target contour feature generation network, when the fourth image feature is fused with second sub-state information and the second sub-state information is updated, the fourth image feature may be inputted into the target first fusion sub-network, and second sub-hidden state information provided by the target first fusion sub-network is the second sub-state information. In this way, the target first fusion sub-network fuses the fourth image feature with second sub-hidden state information provided by the target first fusion sub-network and updates the second sub-hidden state information provided by the target first fusion sub-network, to obtain the feature of the contour mask image of the object outputted by the target first fusion sub-network.

For an implementation in which the target first fusion sub-network fuses the fourth image feature with the second sub-hidden state information and updates the second sub-hidden state information, refer to the foregoing embodiment. Details are not described herein again.

In an embodiment of this application, the foregoing first fusion sub-network is a gated recurrent unit (Gated Recurrent Unit, GRU) or a long short-term memory (Long Short-Term Memory, LSTM) unit.

The GRU and LSTM units both have an information memory function. Either of the two units is used as the first fusion sub-network. The unit can store hidden state information representing a fusion feature of the contour mask image of the object in the segmented video frame, which can accurately fuse the fourth image feature with the second sub-hidden state information provided by the first fusion sub-network and improve accuracy of the feature of the contour mask image of the object outputted by the sub-network, thereby improving accuracy of video matting.

For the foregoing first image generation network, when the first contour mask image is obtained based on the finally obtained feature of the contour mask image of the object, the finally obtained feature of the contour mask image of the object is inputted into the first image generation network, and the first image generation network generates an image based on the feature, so as to obtain an image outputted by the network as the foregoing first contour mask image.

For an implementation in which the first image generation network generates an image based on the feature, refer to the foregoing embodiment. Details are not described herein again.

For a target second reconstruction sub-network in the target transparency feature generation network, when feature reconstruction is performed based on the first target feature and the second target feature, the first target feature and the second target feature are inputted into the target second reconstruction sub-network, and the target second reconstruction sub-network performs feature reconstruction based on the first target feature and the second target feature, to obtain the second image feature that is outputted by the target second reconstruction sub-network and is at an increased scale. A scale of a transparency mask image corresponding to the target transparency feature generation network is the same as the scale of the second image feature.

For an implementation in which the target second reconstruction sub-network performs feature reconstruction based on the first target feature and the second target feature, refer to the foregoing embodiment. Details are not described herein again.

In an embodiment of this application, the foregoing second reconstruction sub-network is implemented based on a QARepVGG network structure.

Due to high quantization computation accuracy of a QARepVGG network, implementing the foregoing second reconstruction sub-network based on the QARepVGG network structure can enhance a quantization computation capability of the second reconstruction sub-network, thereby improving accuracy of feature reconstruction performed based on the first target feature and the second target feature by the second reconstruction sub-network and improving accuracy of video matting.

In another embodiment of this application, a second reconstruction sub-network in a particular transparency feature generation network is implemented based on the QARepVGG network structure.

The particular transparency feature generation network is: a transparency feature generation network corresponding to a transparency mask image whose scale is less than a second preset scale.

The foregoing second preset scale may be a scale set in advance. The second preset scale and the first preset scale may be the same or different.

When the foregoing video matting model is constructed, a scale of a transparency mask image corresponding to each group of transparency feature generation networks may be determined. In this way, it can be determined that the transparency feature generation network corresponding to the transparency mask image whose scale is less than the second preset scale is a particular transparency feature generation network, so as to construct the particular transparency feature generation network based on the QARepVGG network structure when the particular transparency feature generation network is constructed. Another transparency feature generation network may be constructed based on another network structure.

An amount of computation for generating a U-shaped residual block in the particular transparency feature generation network based on the QARepVGG network structure increases as the scale of the transparency mask image corresponding to the network increases. Therefore, when each transparency feature generation network is constructed, only for a particular transparency feature generation network corresponding to a transparency mask image whose scale is less than the first preset scale, the second reconstruction sub-network in the particular transparency feature generation network may be implemented based on the QARepVGG network structure. In this way, an amount of computation for each transparency feature generation network can be reduced, efficiency of obtaining the fusion result can be improved, thereby improving efficiency of video matting, and the foregoing video matting model can also be deployed in a lightweight manner in the terminal.

For the target second fusion sub-network in the target transparency feature generation network, when the second image feature is fused with first sub-state information and the first sub-state information is updated, the second image feature may be inputted into the target second fusion sub-network, and first sub-hidden state information provided by the target second fusion sub-network is the first sub-state information. In this way, the target second fusion sub-network fuses the second image feature with the first sub-hidden state information provided by the target second fusion sub-network and updates the first sub-hidden state information provided by the target second fusion sub-network, to obtain the third image feature outputted by the target second fusion sub-network.

For an implementation in which the target second fusion sub-network fuses the second image feature with the first sub-hidden state information and updates the first sub-hidden state information, refer to the foregoing embodiment. Details are not described herein again.

In an embodiment of this application, the foregoing second fusion sub-network is a gated recurrent unit (Gated Recurrent Unit, GRU) or a long short-term memory (Long Short-Term Memory, LSTM) unit.

The GRU and LSTM units both have an information memory function. Either of the two units is used as the second fusion sub-network. The unit can store hidden state information representing a fusion feature of the transparency mask image of the object in the segmented video frame, which can accurately fuse the second image feature with the first sub-hidden state information provided by the second fusion sub-network and improve accuracy of the third image feature outputted by the sub-network, thereby improving accuracy of video matting.

For the foregoing second image generation network, when the first contour mask image is obtained based on the finally obtained fusion result, the fusion result is inputted into the second image generation network, and the second image generation network generates an image based on the fusion result, so as to obtain an image outputted by the network as the foregoing target transparency mask image.

For an implementation in which the second image generation network generates an image based on the fusion result, refer to the foregoing embodiment. Details are not described herein again.

For the result output network, when regional matting is performed, the target transparency mask image and the first contour mask image are inputted into the result output network, and the result output network performs regional matting on the target video frame according to the target transparency mask image and the first contour mask image, to obtain a matting result outputted by the result output network.

For an implementation in which the result output network performs regional matting on the target video frame, refer to the foregoing content. Details are not described herein again.

As can be seen from the above, in the solution provided in this embodiment, video matting is performed by using the networks and the sub-networks included in the video matting model. Since the video matting model is a pre-trained video matting model, accuracy of video matting can be improved by using the video matting model. Moreover, the video matting model does not need to perform any interaction with other devices. Therefore, the video matting model may be deployed in an offline device, which can improve convenience of video segmentation.

Since the first target feature and the second target feature generally have a larger amount of data, feature reconstruction performed by the target second reconstruction sub-network involves a larger amount of computation, leading to low efficiency of feature reconstruction performed by the target second reconstruction sub-network, so that video matting performed by using the video matting model also has low efficiency.

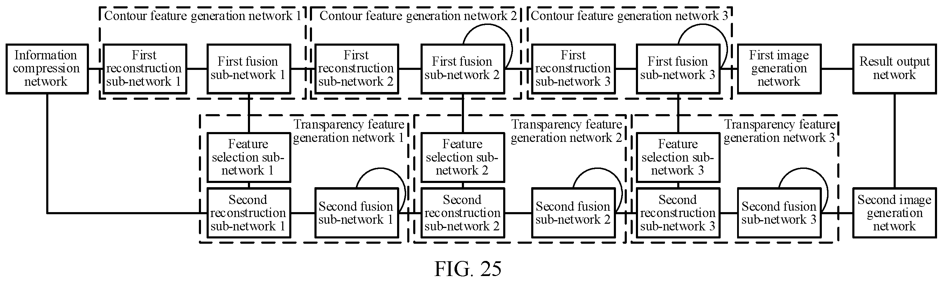

In view of this, in an embodiment of this application, refer to FIG. 25 which provides a schematic structural diagram of a second video matting model. Compared with FIG. 23, in the video matting model shown in FIG. 25, each transparency feature generation network further includes a feature selection sub-network, the first fusion sub-network 1 is connected to the second reconstruction sub-network 1 by using a feature selection sub-network 1, the first fusion sub-network 2 is connected to the second reconstruction sub-network 2 by using a feature selection sub-network 2, and the first fusion sub-network 3 is connected to the second reconstruction sub-network 3 by using a feature selection sub-network 3.

For a target feature selection sub-network in the target transparency feature generation network, before a feature outputted by the target first fusion sub-network is inputted into the target second reconstruction sub-network, the feature may be inputted into the target feature selection sub-network, the target feature selection sub-network selects, from the feature, a target selection feature representative of an edge contour of the object and inputs the target selection feature into the target second reconstruction sub-network in the target transparency feature generation network, and the target second reconstruction sub-network performs feature reconstruction based on the target selection feature.

Specifically, for an implementation in which the target feature selection sub-network selects a feature and an implementation in which the target second reconstruction sub-network performs feature reconstruction based on the target selection feature and the first target feature, refer to the foregoing embodiment. Details are not described herein again.

As can be seen from the above, in the solution provided in this embodiment, by adding the feature selection sub-network to the transparency feature generation network, an amount of computation for feature reconstruction performed by the second reconstruction sub-network in the transparency feature generation network can be reduced, and efficiency of feature reconstruction performed by the second reconstruction sub-network can be improved, thereby improving efficiency of video matting performed by the video matting model.

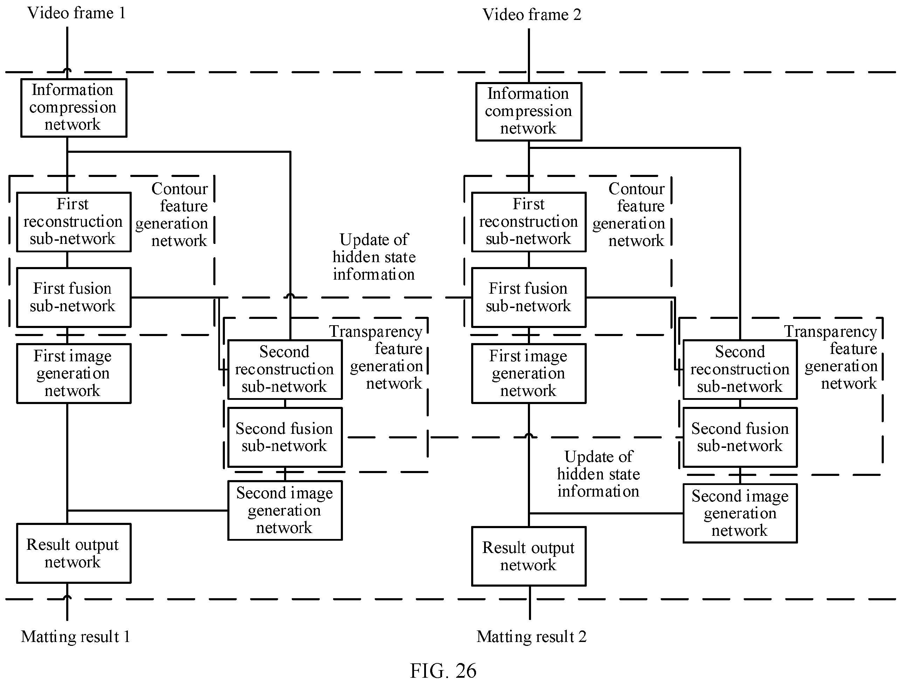

In an embodiment of this application, refer to FIG. 26 which provides a schematic flowchart of a fourth video matting method. In FIG. 26, the video matting model sequentially processes a video frame 1 and a video frame 2 included in a video. When the video matting model processes the video frame 1, the video frame 1 is processed respectively by the networks and the sub-networks in the model, to obtain a matting result 1 corresponding to the video frame 1. The first fusion sub-network and the second fusion sub-network in the model output information to other network layers on the one hand, and update hidden state information included therein on the other hand, which is used for the model to perform fusion with an input feature when processing the following video frame 2. When the video matting model processes the video frame 2, the video frame 2 is processed respectively by the networks and the sub-networks in the model, to obtain a matting result 2 corresponding to the video frame 2.

In an embodiment of this application, when the video matting model includes a larger quantity of groups of contour feature generation networks and transparency feature generation networks, processing the video frame by the video matting model also involves a larger amount of computation. In view of this, the first fusion sub-network in the final one or more groups of contour feature generation networks included in the video matting model may be removed, or the second fusion sub-network in the final one or more groups of transparency feature generation networks included in the video matting model may be removed, thereby reducing an amount of computation for processing the video frame by the video matting model, and the video matting model can also be deployed in a lightweight manner in the terminal.

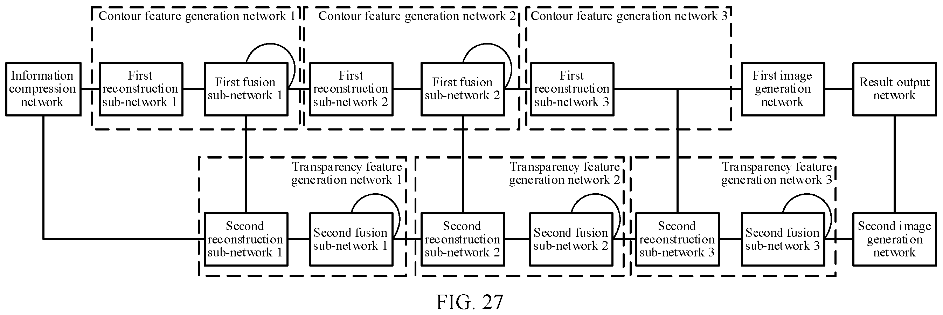

Using an example in which the first fusion sub-network in the final group of contour feature generation networks is removed, refer to FIG. 27 which provides a schematic structural diagram of a third video matting model. Compared with the video matting model shown in FIG. 23, the final group of contour feature generation networks 3 in the video matting model shown in FIG. 27 includes only a first reconstruction sub-network 3, and an output result of the first reconstruction sub-network 3 is a finally obtained feature of the contour mask image of the object.

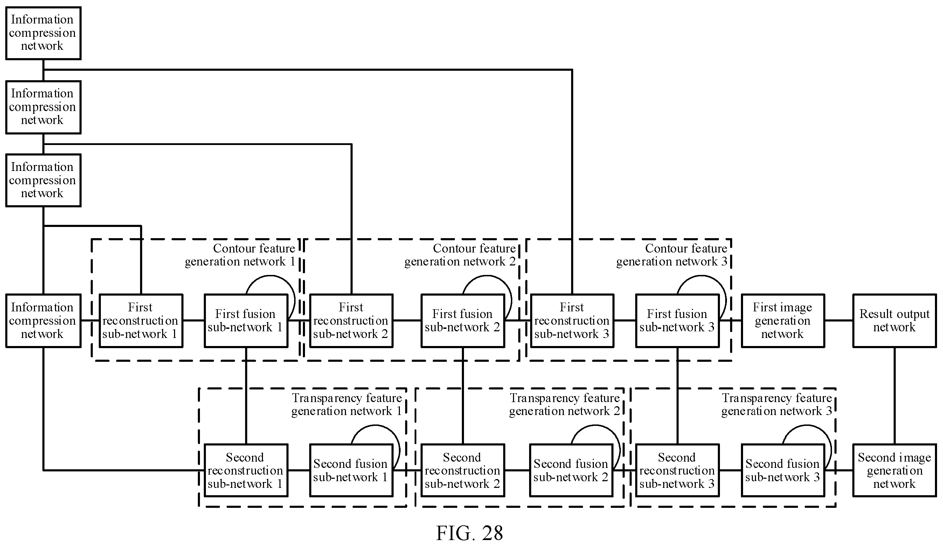

In an embodiment of this application, refer to FIG. 28 which provides a schematic structural diagram of a fourth video matting model. The video matting model shown in FIG. 26 includes a multi-layer cascaded information compression network, an output result of each layer of the information compression network is a first sub-feature, and one layer of the information compression network is connected to the first reconstruction sub-network in one group of contour feature generation networks. The final layer of the information compression network is connected to the first group of contour feature generation networks. A scale of the first sub-feature outputted by the connected information compression network is the same as a scale of a third target feature to be processed by the contour feature generation network. The first sub-feature outputted by the final layer of the information compression network is used as the third target feature to be processed by the first group of contour feature generation networks, and the first reconstruction sub-network in another group of contour feature generation networks performs feature reconstruction based on the third target feature and the first sub-feature outputted by the information compression network connected to the network, thereby improving accuracy of feature reconstruction and improving accuracy of video matting.

A training process of the foregoing video matting model is described below.

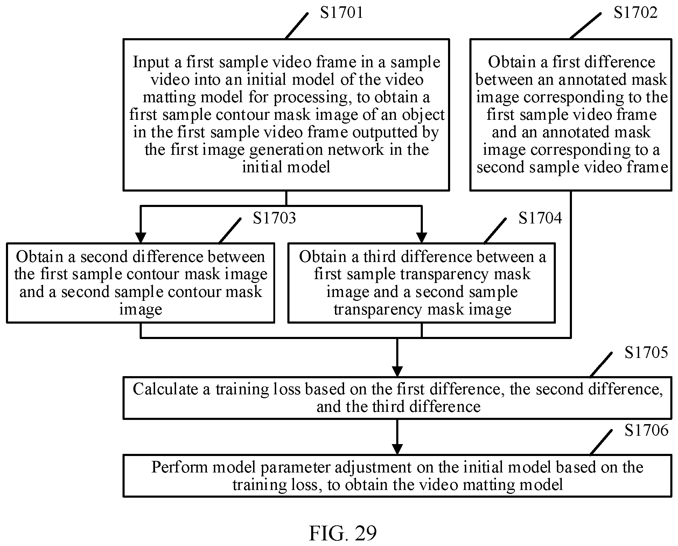

In an embodiment of this application, refer to FIG. 29 which provides a schematic flowchart of a first model training method. In this embodiment, the foregoing method includes the following steps S1701 to S1706.

Step S1701: Input a first sample video frame in a sample video into an initial model of the video matting model for processing, to obtain a first sample contour mask image of an object in the first sample video frame outputted by the first image generation network in the initial model.

The foregoing sample video may be any video acquired from a network, a video library, or another channel. In addition, after videos are acquired from the network, the video library, or the another channel, a plurality of videos may be spliced into one video, to obtain a spliced video as the sample video.

A scale of the foregoing first sample contour mask image is the same as that of the first sample video frame. Pixel values of pixels in the first sample contour mask image represent confidence levels at which the pixels at a same position in the first sample video frame predicted by the model belong to a region of the object.

The foregoing initial model is configured to process a video frame inputted into the model according to a configured untrained model parameter. In a process of processing the video frame by the model, an image outputted by the first image generation network in the model may be obtained.

Specifically, after the first sample video frame is inputted into the initial model, the initial model may process the first sample video frame according to a configured model parameter, and obtain the image outputted by the first image generation network in the model as the first sample contour mask image of the object in the first sample video frame.

Step S1702: Obtain a first difference between an annotated mask image corresponding to the first sample video frame and an annotated mask image corresponding to a second sample video frame.

The second sample video frame is a video frame that is in the sample video and precedes the first sample video frame by a preset quantity of frames.

The foregoing preset quantity of frames is a quantity of frames set in advance, for example, 3, 4, or a frame quantity of another value.

The foregoing first sample video frame may be an X^{th} preset video frame in the sample video or any video frame following the X^{th} preset video frame.

The foregoing first difference may be calculated by the terminal, or may be calculated by another device. The terminal device then acquires the calculated first difference from the another device.

An implementation in which the terminal or another device calculates the first difference is described below.

The terminal or another device may obtain an annotated mask image corresponding to each sample video frame in the sample video, and the annotated mask image corresponding to the sample video frame may be understood as an actual mask image of the object in the sample video frame. In this way, after the second sample video frame is determined according to a frame number of the first sample video frame and a preset quantity of frames, the annotated mask image corresponding to the first sample video frame and the annotated mask image corresponding to the second sample video frame may be obtained from the annotated mask images corresponding to the obtained sample video frames, thereby calculating the first difference between the two obtained annotated mask images.

When the first difference between the two annotated mask images is calculated, in an implementation, the first difference may be calculated by subtracting pixel values of pixels at a same position in the two images and counting a quantity of results that are not "0" in operation results of the pixels. Alternatively, a ratio of a quantity of results that are not "0" to a total quantity of pixels in the annotated mask image may be used as the foregoing first difference. In another implementation, a similarity between the two images may be calculated, and the calculated similarity is subtracted from 1 to obtain an operation result as the foregoing first difference.

Step S1703: Obtain a second difference between the first sample contour mask image and a second sample contour mask image, where the second sample contour mask image is a mask image outputted by the first image generation network when the initial model processes the second sample video frame.

Specifically, similar to the foregoing video matting process, during model training, sample video frames in the sample video may be inputted into the model frame by frame to obtain sample contour mask images, which are outputted by the first image generation network in the model, of the objects in the sample video frames. After the first sample contour mask image is obtained, the second sample video frame that detects a preset quantity of frames with the first sample video frame may be determined from video frames that are before the first sample video frame and have been processed by the model, the second sample contour mask image outputted by the first image generation network when the model processes the second sample video frame is obtained, and the second difference between the first sample contour mask image and the second sample contour mask image is calculated.

An implementation of calculating the foregoing second difference is the same as the implementation of calculating the first difference in step S1702. Details are not described herein again.

Step S1704: Obtain a third difference between a first sample transparency mask image and a second sample transparency mask image.

The first sample transparency mask image is a mask image outputted by the second image generation network when the initial model processes the first sample video frame.

The second sample transparency mask image is a mask image outputted by the second image generation network when the initial model processes the second sample video frame.

Specifically, after the first sample video frame is inputted into the initial model, the initial model may process the first sample video frame according to a configured model parameter, and obtain an image outputted by the second image generation network in the model as the first sample transparency mask image. After the second sample video frame is inputted into the initial model, the initial model may process the second sample video frame according to a configured model parameter, and obtain an image outputted by the second image generation network in the model as the second sample transparency mask image. In this way, after the first sample transparency mask image and the second sample transparency mask image are obtained, the third difference between the first sample transparency mask image and the second sample transparency mask image may be calculated.

An implementation of calculating the foregoing third difference is the same as the implementation of calculating the first difference in step S1702. Details are not described herein again.

Step S1705: Calculate a training loss based on the first difference, the second difference, and the third difference.

When the training loss is calculated based on the first difference, the second difference, and the third difference, the training loss may be calculated by using a loss function, an algorithm, or the like.

Step S1706: Perform model parameter adjustment on the initial model based on the training loss, to obtain the video matting model.

Specifically, based on the training loss, the model parameter adjustment may be performed on the initial model by using any one of the following three implementations.

In a first implementation, for each model parameter in the initial model, a correspondence between training losses and an adjustment range of the model parameter may be preset. In this way, after the training loss is calculated, an actual adjustment range for adjusting the model parameter may be calculated according to the correspondence, so as to adjust the model parameter according to the actual adjustment range.

In a second implementation, the initial model generally needs to be trained by using a large amount of sample data. During the training, the training loss needs to be continuously calculated, and model parameter adjustment is continuously performed on the initial model based on the training loss. In view of this, after the training loss is calculated, a training loss change difference may be determined according to the training loss and a previously calculated training loss, and then model parameter adjustment is performed on the initial model according to the change difference.

In a third implementation, based on the training loss, model parameter adjustment may be performed on the initial model by using a model parameter adjustment algorithm, a function, or the like.

As can be seen from the above, in the solution provided in this embodiment, temporal correlation generally exists between the first sample video frame and the second sample video frame separated by a preset quantity of frames. In this way, when the first difference between the annotated mask image corresponding to the first sample video frame and the annotated mask image corresponding to the second sample video frame, the second difference between the first sample contour mask image and the second sample contour mask image, and the third difference between the first sample transparency mask image and the second sample transparency mask image are obtained, the training loss is calculated based on the first difference, the second difference, and the third difference, and model parameter adjustment is performed on the initial model based on the training loss, the initial model is enabled to learn temporal correlation between different video frames, thereby improving accuracy of the trained model, and then video matting is performed by using the model, which can improve accuracy of video matting.

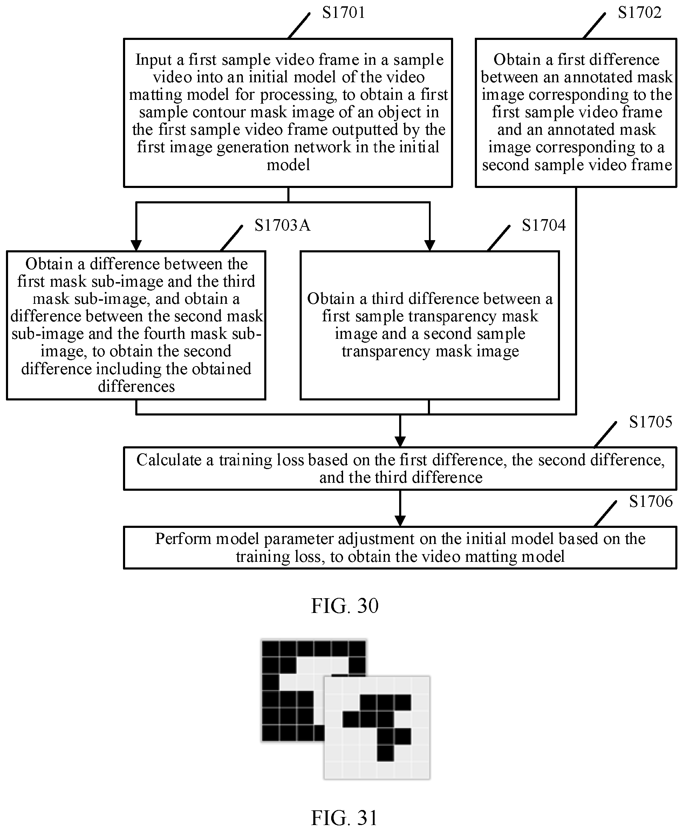

In addition to the manner mentioned in step S1703, the foregoing second difference may also be obtained in the manner mentioned in step S1703A in the embodiment shown in FIG. 30.

In an embodiment of this application, refer to FIG. 30 which provides a schematic flowchart of a second model training method.

In this embodiment, the foregoing first sample contour mask image includes: a first mask sub-image identifying a region of the object in the first sample video frame and a second mask sub-image identifying a region outside the object in the first sample video frame.

Pixel values of pixels in the foregoing first mask sub-image represent confidence levels at which the pixels at a same position in the first sample video frame predicted by the model belong to a region of the object. Pixel values of pixels in the foregoing second mask sub-image represent confidence levels at which the pixels at the same position in the first sample video frame predicted by the model belong to a region outside the object.

As shown in FIG. 31, FIG. 31 shows a mask image according to an embodiment of this application. The mask image is a first sample mask image.

The mask image shown in FIG. 31 includes two sub-images, which are respectively a first mask sub-image identifying a region of the object in the first sample video frame and a second mask sub-image identifying a region outside the object in the first sample video frame.

The foregoing second sample contour mask image includes: a third mask sub-image identifying a region of the object in the second sample video frame and a fourth mask sub-image identifying a region outside the object in the second sample video frame.

Pixel values of pixels in the foregoing third mask sub-image represent confidence levels at which the pixels at a same position in the second sample video frame predicted by the model belong to a region of the object. Pixel values of pixels in the foregoing fourth mask sub-image represent confidence levels at which the pixels at the same position in the second sample video frame predicted by the model belong to a region outside the object.

In this case, step S1703 may be implemented by using the following step S1703A.

Step S1703A: Obtain a difference between the first mask sub-image and the third mask sub-image, and obtain a difference between the second mask sub-image and the fourth mask sub-image, to obtain the second difference including the obtained differences.

An implementation of obtaining the difference between the first mask sub-image and the third mask sub-image and the difference between the second mask sub-image and the fourth mask sub-image is the same as the foregoing implementation of obtaining the first difference or the second difference. Details are not described herein again.

After the two differences, that is, the difference between the first mask sub-image and the third mask sub-image and the difference between the second mask sub-image and the fourth mask sub-image, are obtained, the two differences may be accumulated, to obtain the second difference including the two differences, an average value of the two differences may be used as the second difference, and a larger one of the two differences may be determined as the second difference, or the like.

As can be seen from the above, in the solution provided in this embodiment, a video frame includes two regions, that is, a region of an object and a region outside the object, and a greater difference between the regions of the object in different video frames indicates a greater difference between the regions outside the object in the different video frames, so the difference between the regions outside the object may also reflect the difference between the regions of the object. Therefore, obtaining the second difference according to the two differences, that is, the difference between the first mask sub-image and the third mask sub-image and the difference between the second mask sub-image and the fourth mask sub-image, is to comprehensively calculate the foregoing second difference from two different perspectives, which can improve accuracy of the second difference, thereby improving accuracy of model training and improving accuracy of video matting performed by using the model.

When the second fusion sub-network in the foregoing video matting model fuses a feature with hidden state information provided by the second fusion sub-network, it may be ensured that features of transparency mask images corresponding to segmented video frames are considered during matting on the target video frame, that is, temporal continuity between video frames is ensured. However, in this case, if it is not strictly constrained that the image outputted by the second image generation network in the model is a binary image, a translucent region may exist in an image finally outputted by the second image generation network. Moreover, a pixel value range of pixels in a target transparency mask image outputted by the second image generation network is from 0 to 1, and a translucent region may exist in the target transparency mask image outputted by the second image generation network. In this way, it is difficult to determine a reason why the translucent region exists in the target transparency mask image, and it is also difficult to train the networks and the sub-networks in the matting branch of the model.

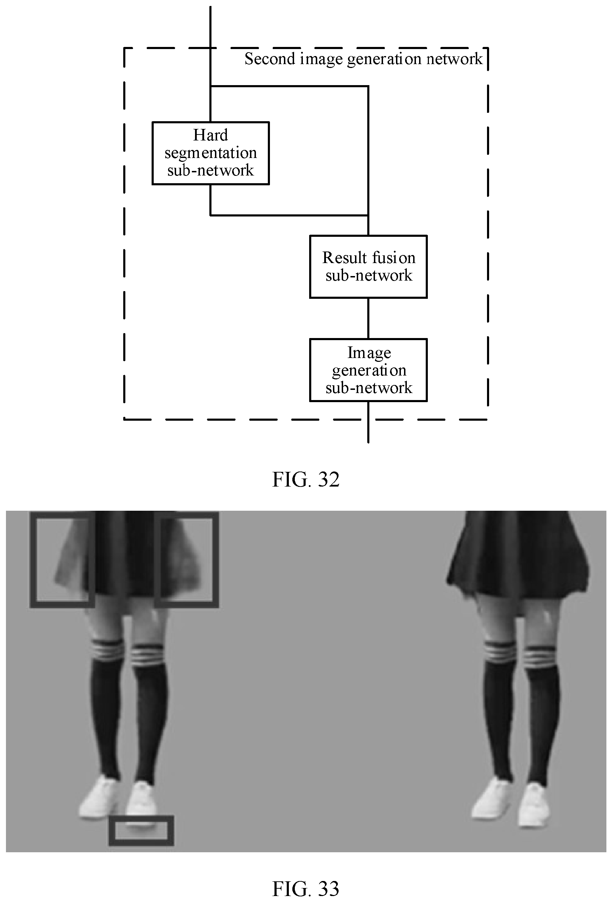

In view of this, in an embodiment of this application, refer to FIG. 32 which provides a schematic structural diagram of a second image generation network. In FIG. 32, the second image generation network includes a hardware segmentation sub-network, a result fusion sub-network, and an image generation sub-network.

An input to the hardware segmentation sub-network is a fusion result outputted by the second fusion sub-network in the final group of transparency feature generation networks.

The hardware segmentation sub-network is configured to obtain a second contour mask image of the object in the target video frame based on the fusion result.

The result fusion sub-network is configured to fuse the second contour mask image with the fusion result to obtain a target fusion feature.

The image generation sub-network is configured to obtain the target transparency mask image of the object edge in the target video frame based on the target fusion feature.

During model training, the initial model may be trained based on the first difference, the second difference, and the third difference, mask images corresponding to different sample video frames outputted by the hardware segmentation sub-network may be obtained, and a fourth difference between the mask images is calculated, to train the initial model according to the fourth difference. Since the hard segmentation sub-network outputs a contour mask image belonging to the binary image, in this way, during the training, a possibility that a translucent region exists in the mask image outputted by the second image generation network can be excluded, thereby accurately and rapidly implementing training of the initial model.

As shown in FIG. 33, the left side of FIG. 33 shows a finally obtained matting result when model training is not performed by using the fourth difference, and the right side of FIG. 33 shows a finally obtained matting result when model training is performed by using the fourth difference.

An electronic device provided in an embodiment of the disclosure is described below.

The electronic device may be a portable terminal device equipped with an iOS^{®}, Android^{®}, Microsoft^{®}, or another operating system, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device.

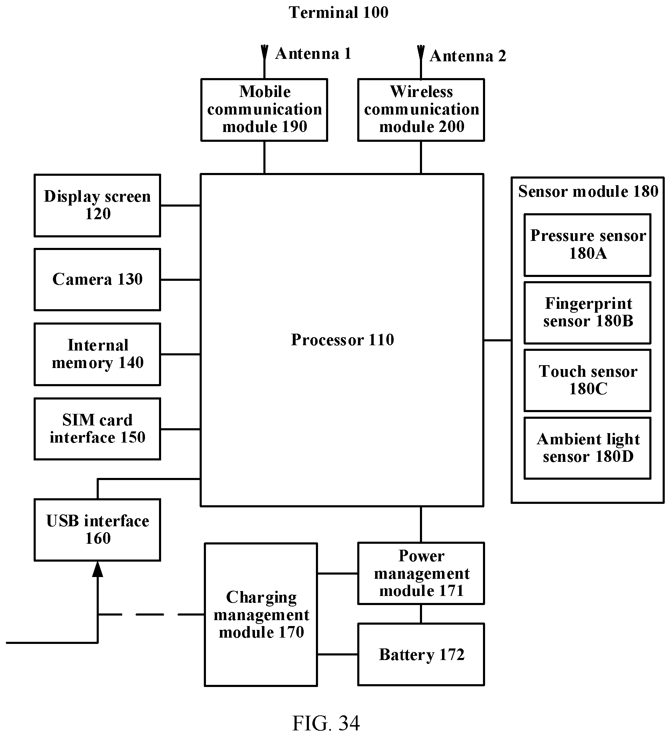

FIG. 34 exemplarily shows an electronic device 100 according to an embodiment of this application. The electronic device 100 may support AOD, and the screen thereof has a pixel-level light-emitting capability, to support lighting up of only some pixels of the screen, for example, an organic light-emitting diode (OLED) screen.

The electronic device 100 may include a processor 110, a display screen 120, a camera 130, an internal memory 140, a subscriber identification module (Subscriber Identification Module, SIM) card interface 150, a universal serial bus (Universal Serial Bus, USB) interface 160, a charging management module 170, a power management module 171, a battery 172, a sensor module 180, a mobile communication module 190, a wireless communication module 200, an antenna 1, an antenna 2, and the like. The sensor module 180 may include a pressure sensor 180A, a fingerprint sensor 180B, a touch sensor 180C, an ambient light sensor 180D, and the like.

The schematic structure in this embodiment of this application does not constitute specific limitations on the electronic device 100. In some other embodiments of this application, the electronic device 100 may include more or fewer components than those shown in the figure, some components may be combined, some components may be split, or components may be arranged in different manners. The components shown in the figure may be implemented by using hardware, software, or a combination of software and hardware.

The processor 110 may include one or more processing units. For example, the processor 110 may include a central processing unit (Central Processing Unit, CPU), an application processor (Application Processor, AP), a modem processor, a graphics processing unit (graphics processing unit, GPU), an image signal processor (Image Signal Processor, ISP), a controller, a video codec, a digital signal processor (Digital Signal Processor, DSP), a baseband processor, a neural-network processing unit (Neural-network Processing Unit, NPU), and/or the like. Different processing units may be separate components, or may be integrated into one or more processors. In some embodiments, the electronic device 100 may alternatively include one or more processors 110. The controller may generate an operation control signal based on instruction operation code and a time-sequence signal, and control obtaining and execution of instructions. In some other embodiments, a memory may be further disposed in the processor 110, and is configured to store instructions and data. Exemplarily, the memory in the processor 110 may be a cache memory. The memory may store instructions or data that is just used or cyclically used by the processor 110. If the processor 110 needs to use the instructions or the data again, the processor may directly invoke the instructions or the data from the memory. This avoids repeated access, and reduces a waiting time of the processor 110, thereby improving efficiency of the electronic device 100 in processing data or executing instructions.

In some embodiments, the processor 110 may include one or more interfaces. The interfaces may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a SIM card interface, a USB interface, and/or the like. The USB interface 160 is an interface that conforms to a standard USB specification, and may be specifically a Mini USB interface, a Micro USB interface, a USB Type C interface, or the like. The USB interface 160 may be configured to connect to a charger to charge the electronic device 100, or may be configured for data transmission between the electronic device 100 and a peripheral device. The USB interface 160 may be further configured to connect to a headset to play an audio by using the headset.

An interface connection relationship between the modules illustrated in this embodiment of this application is merely a schematic description, and does not constitute a limitation on the structure of the electronic device 100. In some other embodiments of this application, the electronic device 100 may alternatively adopt an interface connection manner different from that in the foregoing embodiment, or adopt a combination of a plurality of interface connection manners.

A wireless communication function of the electronic device 100 may be implemented by using the antenna 1, the antenna 2, the mobile communication module 190, the wireless communication module 200, the modem processor, a baseband processor, and the like.

The antenna 1 and the antenna 2 are configured to transmit and receive an electromagnetic wave signal. Each antenna in the electronic device 100 may be configured to cover one or more communication frequency bands. Different antennas may further be reused to improve utilization of the antennas. For example, the antenna 1 may be reused as a diversity antenna of a wireless local area network. In some other embodiments, the antenna may be used in combination with a tuning switch.

The electronic device 100 may implement a display function by using the GPU, the display screen 120, the application processor, and the like. The GPU is an image processing microprocessor, and is connected to the display screen 120 and the application processor. The GPU is configured to execute mathematical and geometric calculation, and is configured to render graphics. The processor 110 may include one or more GPUs that execute a program instruction to generate or change display information.

The display screen 120 is configured to display an image, a video, and the like. The display screen 120 includes a display panel, and a display panel with a pixel-level light-emitting capability such as an organic light-emitting diode (OLED) or an active-matrix organic light-emitting diode (Active-Matrix Organic Light Emitting Diode, AMOLED) may be adopted.

The electronic device 100 may implement a photographing function by using the ISP, the camera 130, the video codec, the GPU, the display 120, the application processor, and the like. The camera 130 includes a front-facing camera and a rear-facing camera.

The ISP is configured to process data fed back by the camera 130. For example, during photographing, a shutter is pressed, and light is transmitted to a photosensitive element of the camera by using a lens. An optical signal is converted into an electrical signal, and the photosensitive element of the camera transmits the electrical signal to the ISP for processing, to convert the electrical signal into a visible image. The ISP may optimize an algorithm for noise, brightness, and colors of the image, and the ISP may further optimize parameters, such as exposure and a color temperature of a photographing scenario. In some embodiments, the ISP may be disposed in the camera 130.

The camera 130 is configured to take photos or shoot videos. The lens generates an optical image for an object, and the optical image is projected to the photosensitive element. The photosensitive element may be a charge-coupled device (Charge Coupled Cevice, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in standard red green blue (Red Green Blue, RGB) and YUV formats. In some embodiments, the electronic device 100 may include 1 or N cameras 130, where N is a positive integer greater than 1.

The digital signal processor is configured to process a digital signal. In addition to processing a digital image signal, the digital signal processor may further process another digital signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play back or record videos in a plurality of encoding formats, for example, moving picture experts group (Moving Picture Experts Group, MPEG) 1, MPEG2, MPEG3, and MPEG4.

The NPU is a neural-network (Neural-Network, NN) computing processor, which is configured to quickly process input information by using a biological neural network structure, for example, a transmission mode between neurons in a human brain, and may further perform continuous self-learning. The NPU may be configured to implement an application such as intelligent cognition of the electronic device 100, for example, image recognition, facial recognition, voice recognition, and text understanding.

The internal memory 140 may be configured to store one or more computer programs, and the one or more computer programs include instructions. The processor 110 may run the instructions stored in the internal memory 140 to cause the electronic device 100 to perform the video matting method provided in some embodiments of this application, various applications, data processing, and the like. The internal memory 140 may include a program storage region and a data storage region. The program storage region may store an operating system. The program storage region may also store one or more applications (such as Gallery and Contacts) and the like. The data storage region may store data (for example, photos and contacts) and the like created during use of the electronic device 100. In addition, the internal memory 140 may include a high-speed random access memory, or may include a non-volatile memory such as at least one disk storage device, a flash memory device, or a universal flash storage (Universal Flash Storage, UFS). In some embodiments, the processor 110 may cause the electronic device 100 to perform the video matting method provided in the embodiments of this application and execute various applications and data processing by running instructions stored in the internal memory 140 and/or instructions stored in the memory disposed in the processor 110.

For example, the internal memory 140 may be configured to store program code or program instructions used for implementing the wallpaper display method and the video matting method provided in the embodiments of this application. The processor 110 may invoke the program code or program instructions of the wallpaper display method and the video matting method stored in the internal memory 140 and perform the wallpaper display method and the video matting method provided in the embodiments of this application.

The sensor module 180 may include a pressure sensor 180A, a fingerprint sensor 180B, a touch sensor 180C, an ambient light sensor 180D, and the like.

The pressure sensor 180A is configured to sense a pressure signal, and may convert the pressure signal into an electrical signal. In some embodiments, the pressure sensor 180A may be disposed on the display screen 120. There are various types of pressure sensors 180A, which may be, for example, a resistive pressure sensor, an inductive pressure sensor, and a capacitive pressure sensor. The capacitive pressure sensor may at least two parallel plates made of conductive materials. When a force is applied to the pressure sensor 180A, capacitance between electrodes changes. The electronic device 100 determines pressure intensity based on a capacitance change. When a touch operation is performed on the display screen 120, the electronic device 100 detects a touch operation intensity by using the pressure sensor 180A. The electronic device 100 may also calculate a touch position based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating an SMS message is executed.

The fingerprint sensor 180B is configured to collect a fingerprint. The electronic device 100 may implement unlocking, application lock access, photographing, answering incoming calls, and other functions by using features of the acquired fingerprint.

The touch sensor 180C is also referred to as a touch device. The touch sensor 180C may be disposed on the display screen 120. The touch sensor 180C and the display screen 120 form a touchscreen, which is also referred to as a touch panel. The touch sensor 180C is configured to detect a touch operation performed on or near the touch sensor. The touch sensor 180C may transmit the detected touch operation to the application processor, to determine a touch event type. A visual output related to the touch operation may be provided by using the display screen 120. In some other embodiments, the touch sensor 180C may alternatively be disposed on a surface of the electronic device 100 at a position different from that of the display screen 120.

The ambient light sensor 180D is configured to sense ambient light brightness. The electronic device 100 may adaptively adjust brightness of the display screen 120 according to the sensed ambient light brightness. The ambient light sensor 180D may also be configured to automatically adjust white balance during photographing. The ambient light sensor 180D may further transmit, to the GPU, information about an environment in which the device is located.

The ambient light sensor 180D is further configured to acquire brightness, a light ratio, a color temperature, and the like of a collection environment in which the camera 130 collects images.

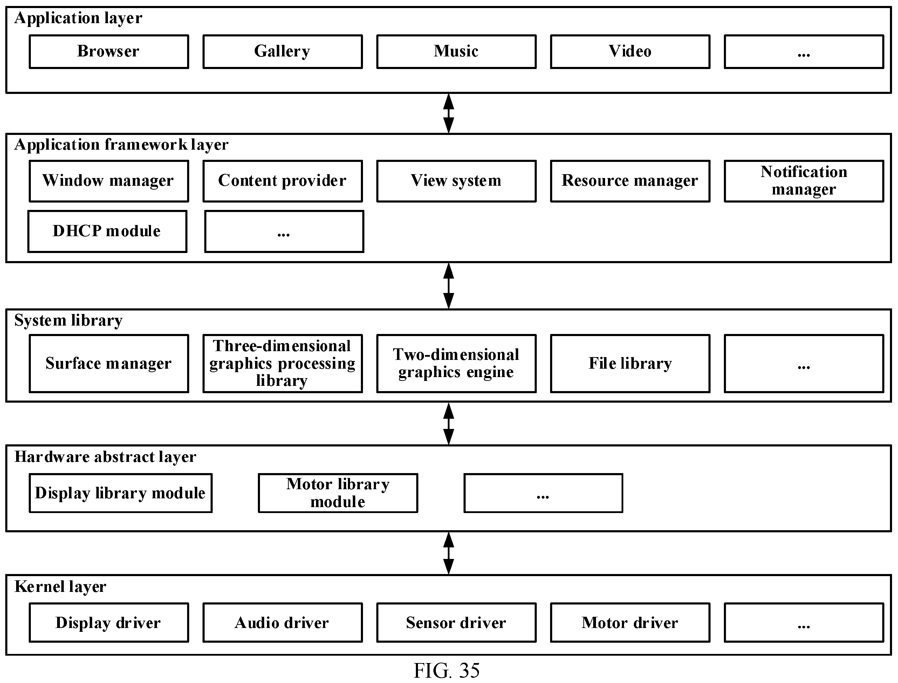

FIG. 35 shows a software system architecture used by the electronic device 100. The software system may adopt a hierarchical architecture, an event-driven architecture, a microkernel architecture, a microservice architecture, or a cloud architecture.

In the hierarchical architecture, a software system of a terminal is divided into a plurality of layers, and each layer has a clear role and task. The layers communicate with each other by using a software interface. In some embodiments, the software system is divided into five layers, which are respectively an application (applications) layer, an application framework (application framework) layer, a system library, a hardware abstract layer (Hardware Abstract Layer, HAL), and a kernel (kernel) layer.

The application layer may include a series of application packages. The application layer runs applications by invoking an application programming interface (Application Programming Interface, API) provided by the application framework layer. As shown in FIG. 35, the application packages may include applications such as Browser, Gallery, Music, and Video. It may be understood that a port of each application above may be configured to receive data.

The application framework layer provides the API and a programming framework for the applications at the application layer. The application framework layer includes some predefined functions. As shown in FIG. 35, the application framework layer may include a window manager, a content provider, a view system, a resource manager, a notification manager, a dynamic host configuration protocol (Dynamic Host Configuration Protocol, DHCP) module, and the like.

The system library may include a plurality of functional modules such as a surface manager, a three-dimensional graphics processing library, a two-dimensional graphics engine, and a file library.

The hardware abstract layer may include a plurality of library modules. The library modules may be, for example, a display library module, a motor library module, and the like. The terminal system may load a corresponding library module for device hardware, and then achieve an objective of accessing the device hardware by the application framework layer.

The kernel layer is a layer between hardware and software. The kernel layer is configured to drive hardware, to enable the hardware to operate. The kernel layer includes at least a display driver, an audio driver, a sensor driver, a motor driver, and the like. This is not limited in the embodiments of this application. It may be understood that the display driver, the audio driver, the sensor driver, the motor driver, and the like may all be considered as a driver node. Each of the foregoing driver nodes includes an interface that may be configured to receive data.

The term "user interface (user interface, UI)" in the specification, claims, and drawings of this application is a medium interface for interaction and information exchange between an application or operating system and a user, and implements conversion between an internal form of information and a form acceptable to the user. The user interface of the application is source code written in a specific computer language such as java and an extensible markup language (extensible markup language, XML). Interface source code is parsed and rendered on a terminal device, and is finally presented as content that can be recognized by the user, such as pictures, text, buttons, and other controls. The controls are also referred to as widgets (widget), and are basic elements of a user interface. Typical controls are a toolbar (toolbar), a menu bar (menu bar), a text box (text box), a button (button), a scrollbar (scrollbar), a picture, and text. Attributes and content of controls in an interface are defined by using tags or nodes. For example, in XML, controls included in an interface are specified by using nodes such as <Textview>, <ImgView>, and <VideoView>. One node corresponds to one control or attribute in an interface, and after being parsed and rendered, the node is presented as content visible to the user. In addition, interfaces of many applications, for example, a hybrid application (hybrid application), generally further include a web page. The web page, also referred to as a page, may be understood as a special control embedded in an application interface. The web page is source code written in a specific computer language, for example, a hyper text markup language (hyper text markup language, HTML), cascading style sheets (cascading style sheets, CSS), a java script (JavaScript, JS), or the like. A browser or a web page display component whose function is similar to that of a browser may load and display the web page source code as user-identifiable content. Specific content included in the web page is also defined using tags or nodes in the web page source code. For example, the HTML defines elements and attributes of the web page by using <p>, <img>, <video>, and <canvas>.

A commonly used form of the user interface is a graphic user interface (graphic user interface, GUI), which refers to a user interface that is related to a computer operation and is displayed graphically. The graphic user interface may be an interface element such as an icon, a window, or a control that is displayed on a display of an electronic device. The control may include visible interface elements such as an icon, a button, a menu, a tab, a text box, a dialog box, a status bar, a navigation bar, and a Widget.

The steps in the foregoing method embodiments provided in this application may be completed through an integrated logic circuit of hardware in the processor or an instruction in the form of software. The steps of the method disclosed with reference to the embodiments of this application may be directly performed by a hardware processor, or by a combination of hardware and software modules in a processor.

This application further provides an electronic device. The electronic device may include a memory and a processor. The memory may be configured to store a computer program. The processor may be configured to invoke the computer program in the memory to enable the electronic device to perform the method in any one of the foregoing embodiments.

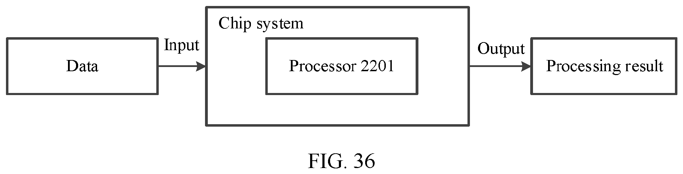

This application further provides a chip system. As shown in FIG. 36, the chip system may include a processor 2201, configured to implement functions involved in the method performed by the electronic device in any one of the foregoing embodiments. The chip system may further include a memory. The memory is configured to store program instructions and data, and the memory is located inside or outside the processor. The chip system may further include an input/output interface. The input/output interface may be used as a bridge for connecting the processor and peripheral input and output devices. Specifically, when the peripheral input device collects input data, for example, the touch panel collects a touch operation of the user, an audio input circuit collects audio data, the camera collects image data, and the like, the input/output interface may transmit the input data to the processor for processing. After the processor completes processing on the input data and generates a processing result, the input/output interface may transmit the processing result to the peripheral output device for output. For example, the processing result is transmitted to the display screen for display, the processing result is transmitted to an audio output circuit for voice output, or the like.

The chip system may include chips, or may include chips and other discrete devices.

Optionally, the chip system may include one or more processors. The processor may be implemented by using hardware or by using software. When implemented by using hardware, the processor may be a logic circuit, an integrated circuit, or the like. When implemented by using software, the processor may be a general-purpose processor and be implemented by reading software code stored in the memory.

Optionally, the chip system may also include one or more memories. The memory may be integrated with the processor, or may be separated from the processor, which is not limited in embodiments of this application. For example, the memory may be a non-transitory memory such as a read-only memory ROM, and the memory and the processor may be integrated on a same chip, or may be respectively disposed on different chips. A type of the memory and a manner of disposing the memory and the processor are not specifically limited in embodiments of this application.

For example, the chip system may be a field programmable gate array (field programmable gate array, FPGA), an application specific integrated circuit (application specific integrated circuit, ASIC), a system on chip (system on chip, SoC), a central processor unit (central processor unit, CPU), a network processor (network processor, NP), a digital signal processor (digital signal processor, DSP), a micro controller unit (micro controller unit, MCU), a programmable logic device (programmable logic device, PLD), or another integrated chip.

This application further provides a computer program product. The computer program product includes a computer program (which may also be referred to as code or an instruction). When the computer program is run, a computer is caused to perform the method performed by the electronic device in any one of the foregoing embodiments.

This application further provides a computer-readable storage medium having a computer program (which may also be referred to as code or an instruction) stored therein. The computer program, when run, causes a computer to perform the method performed by the electronic device in any one of the foregoing embodiments.

The computer program product includes one or more computer instructions. When the computer program instructions are loaded and executed on the computer, the processes or functions according to this application are all or partially generated. The computer may be a general-purpose computer, a special-purpose computer, a computer network, or another programmable apparatus. The computer instructions may be stored in a computer-readable storage medium or transmitted from a computer-readable storage medium to another computer-readable storage medium. For example, the computer instructions may be transmitted from a website, a computer, a server, or a data center to another website, computer, server, or data center in a wired manner (for example, through a coaxial cable, an optical fiber, or a digital subscriber line) or a wireless manner (for example, in an infrared, radio, or microwave manner). The computer-readable storage medium may be any usable medium that can be accessed by the computer, or may be a data storage device, such as a server or a data center in which one or more usable media are integrated. The usable medium may be a magnetic medium (for example, a floppy disk, a hard disk, or a magnetic tape), an optical medium (for example, a DVD), a semiconductor medium (for example, a solid state disk, Solid State Disk), or the like.

A person of ordinary skill in the art may understand that all or some of the procedures of the methods in the foregoing embodiments are implemented. The procedures may be completed by a computer program instructing related hardware. The program may be stored in a computer-readable storage medium. When the program is executed, the procedures in the foregoing method embodiments may be included. The foregoing storage medium includes: any medium that can store program code, such as a ROM, a random access memory RAM, a magnetic disk, or an optical disc.

In conclusion, the foregoing descriptions are merely embodiments of the technical solutions of the present invention, and are not intended to limit the protection scope of the present invention. Any modifications, equivalent replacements, improvements, and the like made based on the disclosure of the present invention shall fall within the protection scope of the present invention.

## Claims

1. A wallpaper display method, comprising:
detecting, by an electronic device in a screen-locked state or an unlocked state, a first operation, and displaying, by the electronic device, a first interface in response to the first operation, the first interface comprising an AOD wallpaper;
displaying, by the electronic device when the electronic device displays the first interface, a second interface in response to a second operation, the second interface comprising a lock screen wallpaper; and
displaying, by the electronic device, a third interface in response to a third operation for unlocking, the third interface comprising a home screen/desktop wallpaper;
wherein the AOD wallpaper, the lock screen wallpaper, and the home screen/desktop wallpaper respectively correspond to a first video frame, a second video frame, and a third video frame in a first video, the second video frame following the first video frame, and the third video frame following the second video frame.

2. The method according to claim 1, wherein the first video frame, the second video frame, and the third video frame are all single frames, a frame interval between the first video frame and the second video frame is greater than a first frame interval, and a frame interval between the second video frame and the third video frame is greater than a second frame interval.

3. The method according to claim 1, wherein the first video frame, the second video frame, and the third video frame are all multi-frames, a start frame in the second video frame is an end frame in the first video frame, and a start frame in the third video frame is an end frame in the second video frame.

4. The method according to any one of claims 1 to 3, wherein the first video is selected from gallery videos.

5. The method according to any one of claims 1 to 4, wherein the first video is selected from videos provided by a setting application.

6. The method according to any one of claims 1 to 5, wherein the method further comprises:
displaying, by the electronic device, a fourth interface, the fourth interface comprising a video frame sequence of a second video; and
selecting the first video from the video frame sequence, wherein the first video is a partial video clip in the second video or an entirety of the second video.

7. The method according to claim 6, wherein the video frame sequence comprises a selection box, and a video in the selection box is the first video; and a user operation of selecting the video clip is specifically an operation of sliding the selection box along the video frame sequence.

8. The method according to claim 6 or 7, wherein the fourth interface further comprises a first preview, the first preview being used for displaying display states of the AOD wallpaper, the lock screen wallpaper, and the home screen/desktop wallpaper at the first interface, the second interface, and the third interface, respectively.

9. The method according to claim 8, wherein the first preview is a video, and the first preview presents, during playback, a dynamic display process of switching from the AOD wallpaper to the lock screen wallpaper and then to the home screen/desktop wallpaper.

10. The method according to any one of claims 1 to 9, wherein the method further comprises: displaying, by the electronic device, a fifth interface, a subject and a background of a wallpaper in the fifth interface being selected by a user separately.

11. The method according to claim 10, wherein before the displaying, by the electronic device, a fifth interface, the method further comprises: performing, by the electronic device, matting for the subject on the first video to separate the subject from the background.

12. The method according to claim 11, wherein the method further comprises:
updating, by the electronic device, an image of the subject in response to a user operation of selecting the subject for subject editing, and refreshing the AOD wallpaper, the lock screen wallpaper, and the home screen/desktop wallpaper based on an updated subject image.

13. The method according to claim 11 or 12, further comprising:
updating, by the electronic device, an image of the background in response to a user operation of selecting the background of the wallpaper for background editing, and refreshing the AOD wallpaper, the lock screen wallpaper, and the home screen/desktop wallpaper based on an updated background image.

14. An electronic device, comprising: one or more processors and one or more memories; wherein the one or more memories are coupled to the one or more processors, the one or more memories are configured to store computer program code, the computer program code comprising computer instructions, and when the one or more processors execute the computer instructions, the method according to any one of claims 1 to 13 is performed.

15. A chip system, the chip system being applied to an electronic device, and the chip system comprising one or more processors, wherein the processor is configured to invoke computer instructions to perform the method according to any one of claims 1 to 13.

16. A computer-readable storage medium, comprising a computer-executable program, wherein when the computer-executable program is run on an electronic device, the method according to any one of claims 1 to 13 is performed.
